(19) **Europäisches Patentamt / European Patent Office / Office européen des brevets**

(11) **EP 1 151 615 B1**

(12) **EUROPEAN PATENT SPECIFICATION**

(45) Date of publication and mention
of the grant of the patent:
**09.11.2011 Bulletin 2011/45**

(51) Int Cl.:
**H04N 7/68** (2006.01)  **H04N 7/26** (2006.01)

(21) Application number: **00908612.5**

(86) International application number:
**PCT/US2000/003637**

(22) Date of filing: **11.02.2000**

(87) International publication number:
**WO 2000/048405 (17.08.2000 Gazette 2000/33)**

(54) **APPARATUS AND METHOD FOR THE RECOVERY OF COMPRESSION CONSTANTS IN THE ENCODED DOMAIN**

VORRICHTUNG UND VERFAHREN ZUR ZURÜCKGEWINNUNG VON KOMPRESSIONSKONSTANTEN IM KODIERTEN BEREICH

SYSTEME ET PROCEDE DE RECUPERATION DE CONSTANTES DE COMPRESSION DANS LE DOMAINE CODE

(84) Designated Contracting States:
**AT BE CH CY DE DK ES FI FR GB GR IE IT LI LU MC NL PT SE**

(30) Priority: **12.02.1999 US 249596**
**29.06.1999 US 342329**

(43) Date of publication of application:
**07.11.2001 Bulletin 2001/45**

(73) Proprietor: **SONY ELECTRONICS, INC.**
**Park Ridge, NJ 07656-8003 (US)**

(72) Inventors:
• **KONDO, Tetsjiro**
**c/0 Sony Corporation**
**Tokyo 141-0001 (JP)**
• **CARRIG, James, J.**
**San Jose, CA 95125 (US)**
• **FUJIMORI, Yasuhiro**
**Cupertino, CA 95014 (US)**
• **GHOSAL, Sugata**
**New Delhi 110 017 (IN)**

(74) Representative: **Robinson, Nigel Alexander Julian et al**
**D Young & Co LLP**
**120 Holborn**
**London EC1N 2DY (GB)**

(56) References cited:
**EP-A- 0 398 741**   **EP-A- 0 597 576**
**WO-A-99/21090**   **US-A- 5 150 210**
**US-A- 5 768 534**

• **PATENT ABSTRACTS OF JAPAN vol. 018, no. 105 (E-1512), 21 February 1994 (1994-02-21) & JP 05 304659 A (SONY CORP), 16 November 1993 (1993-11-16)**
• **JAE-WOH SUH; YO-SUNG HO: "ERROR CONCEALMENT BASED ON DIRECTIONAL INTERPOLATION", IEEE TRANSACTIONS ON CONSUMER ELECTRONICS, vol. 43, no. 3, 1 August 1997 (1997-08-01), pages 295-302, XP011083536,**
• **JAE-WOH SUH; YO-SUNG HO: "ERROR CONCEALMENT BASED ON DIRECTIONAL INTERPOLATION" IEEE TRANSACTIONS ON CONSUMER ELECTRONICS, vol. 43, no. 3, 1 August 1997 (1997-08-01), pages 295-302, XP011083536**

**Description**

BACKGROUND OF THE INVENTION

1. RELATED APPLICATION

This application relates to U.S. Patent Application Serial No.: 09/249,596, filed February 12,1999, titled "Apparatus and Method for the Recovery of Compression Constants in the Encoded Domain".

2. FIELD OF THE INVENTION

The present invention relates to the recovery of data. More particularly, the present invention relates to the recovery of lost/damaged block data in a bitstream of compressed data.

3. ART BACKGROUND

It is often desirable to compress data, such as video images or sound data, for transmission and storage. Typically, when data is compressed, compression constants are generated. In some instances block-wide data is generated. These constants are transmitted or stored along with the compressed image. Problems can arise if the compression constants are lost or damaged prior to decompression of the data. As an illustration, the discussion below illustrates the problems that arise if image data compression constants are lost.

The discrete data points that make up a digital image are known as pixels. Typically, each pixel is represented independently using 8 bits, but other representations also are used for the purposes of compression or analysis. Most of the alternative representations begin by dividing this raw data into disjoint sets. For historical reasons, these sets are referred to as "blocks", even though they may not have a traditional block shape. The alternative representation then characterizes the data by some block-wide information and per-pixel information.

Examples of block-wide information include the minimum pixel value (MIN), the maximum pixel value (MAX), and the dynamic range of the pixel values (DR), where DR=MAX-MIN or DR=1+MAX-MIN. Per-pixel information may indicate where the pixel value lies within the range specified by the global information. For compression to be achieved, the per-pixel information must use only a few bits of storage so that the total number of bits used is less than that required to store the raw image.

In one example, the block data is comprised of the MIN, DR and Qbit number (defined below), and the pixel data is comprised of Q codes. A Q code is a Qbit number that can be an integer in the range $[0,2^Q\text{-}1]$ that identifies one value in the set {MIN, MIN+1,...,MAX}. Since the Qbit number is generally small and the DR value may be relatively large, it is generally not possible to represent all pixel values exactly. Therefore, some quantization error is introduced when pixel values are reduced to Q code values. For instance, if the Qbit number is 3, then it is generally possible to represent $2^3 = 8$ values from the set {MIN,MIN+1,...,MAX} without any error. Pixels with other values are rounded to one of these eight values. This rounding introduces quantization error.

If any of the block information, e.g., MIN, MAX or DR, is lost, the damage to the image is potentially large as many pixels are affected. For this reason, it is desirable to have techniques for accurately estimating or recovering the values of this lost data.

Recovery methods fall into two categories: decoded domain, and encoded domain. Decoded domain techniques restore portions of the image to its raw data format and then exploit local correlation properties to estimate the missing data. Data recovery, including compression constants, may be performed in the decoded domain. However, additional computation and time, and therefore additional expense, is required to perform and evaluate decodings.

"Error Concealment based on directional interpolation" IEEE Transactions On Consumer Electronics, Vol. 43, No. 3, 1 August 1997, pages 295-302 by Jae-Who Suh and Yo-Sung Ho discloses an error concealment technique that: replaces lost motion vectors using motion vectors of surrounding macroblocks; replaces lost DC coefficients of a block using coefficients of the neighboring blocks; and replaces lost data with the linearly interpolated values calculated from neighboring corner pixel values.

US 5,768,534 discloses a data compression device.

SUMMARY OF THE INVENTION

Various respective aspects and features of the invention are defined in the appended claims. Combinations of features from the dependent claims may be combined with features of the independent claims as appropriate and not merely as explicitly set out in the claims

The system and method of embodiments of the present invention provides an innovative technique for recovering lost or damaged (lost/damaged) compression constants of a block in the encoded domain. In one embodiment, a lost/ damaged compression constants is recovered by estimating a compression constant of the block using encoded data of at least one neighboring block of data and other recoverable compression constants of the block and neighboring block. For example, in one embodiment wherein the encoded data comprises image data, each block of data consists of dynamic range (DR) and Minimum (MIN) constants, where DR = MAX-MIN and MAX represents a maximum data value in the block.

BRIEF DESCRIPTION OF THE DRAWINGS

The objects, features and advantages of the present invention will be apparent from the following detailed description in which:

Figure 1 illustrates one embodiment of the method of the present invention.

Figure 2 illustrates an alternate embodiment of the method of the present invention.

Figure 3a illustrates one embodiment of the system of the present invention, and Figure 3b illustrates another embodiment of the system of the present invention.

DETAILED DESCRIPTION

In the following description, for purposes of explanation, numerous details are set forth in order to provide a thorough understanding of the present invention. However, it will be apparent to one skilled in the art that these specific details are not required in order to practice the present invention. In other instances, well known electrical structures and circuits are shown in block diagram form in order not to obscure the present invention unnecessarily.

The following is described in the context of Adaptive Dynamic Range Coding (ADRC) encoded images, and more particularly to the recovery of lost or damaged (lost/damaged) compression constants such as dynamic range (DR) and Minimum value (MIN). However, it is contemplated that the present invention is not limited to ADRC encoding and the particular compression constants generated; rather it will be apparent that the present invention is applicable to different compression technologies, different types of data, including, but not limited to, sound data and the like, and different compression constants including, but not limited to, the Maximum value (MAX) which may be used in ADRC processes. In addition, the present invention is applicable to different types of ADRC processes including edge-matching and non edge-matching ADRC. For further information regarding ADRC, see, "Adaptive Dynamic Range Coding Scheme for Future HDTV Digital VTR", Kondo, Fujimori, Nakaya, Fourth International Workshop on HDTV and Beyond, September 4-6, 1991, Turin, Italy.

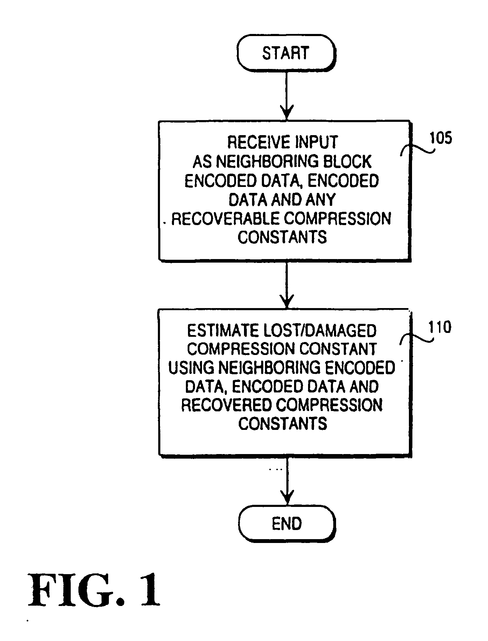

Figure 1 is illustrative of one embodiment of a method for recovery lost/damaged compression constants in accordance with the teachings of the present invention. In this embodiment, certain information, such as the information which identifies the placement of the encoded data in the bitstream is known. However, at least one of the compression constants which are utilized to decode the encoded data is lost or damaged (lost/damaged). In one example in which the data is encoded using ADRC, the present method can be used to recover lost/damaged compression constants such as DR, MAX or MIN. Typically two of these constants, e.g., DR and MIN, are used to decode the encoded data, e.g., Q codes, received in the bitstream. In another embodiment, CEN and DR are used to decode the decoded data. CEN is a central value within the dynamic range. In one embodiment CEN may be set to MIN+DR/2.

Referring to Figure 1, at step 105, encoded data of at least one neighboring block, encoded data of the block with the lost/damaged compression constant, and any previous recovered compression constants of the block and neighboring block are received as input. At step 110, the lost/damaged compression constant is estimated using the neighboring encoded data, encoded data of the block and any previous recovered compression constants of the block and the neighboring block.

A significant time and cost savings is achieved by using the encoded data of the block and the neighboring block as it is not necessary to go through one or more iterations of a costly decoding process before determining the lost/damaged compression constant.

Continuing with the present example which uses MIN and DR to decode the Q codes, if the MIN value is lost/damaged, the DR value and Q codes of the block and the DR, MIN and Q codes of the neighboring block are used to estimate the MIN value using encoded data.

MIN may be estimated as the value that minimizes an average difference between decoded values from the block and corresponding decoded values from at least one neighboring block. The average function can be a weighted average of neighboring values, for example, the values may be weighted relative to the location of the neighboring block with respect to the block of interest. In one embodiment, MIN may be estimated using a least squares estimation. For example, MIN may be determined as follows:

Non edge-matching ADRC:

$$MIN = \frac{2^{Q+Q'+1} \cdot N \cdot MIN' + 2^{Q} \cdot DR' \cdot \sum_{i=1}^{N}(2e_i'+1) - 2^{Q'} \cdot DR \cdot \sum_{i=1}^{N}(2e_i+1)}{2^{Q+Q'+1} \cdot N}$$

Edge-matching ADRC:

$$MIN = \frac{(2^{Q}-1) \cdot (2^{Q'}-1) N \cdot (2 \cdot MIN'+1) + 2 \cdot (2^{Q}-1) \cdot DR' \cdot \sum_{i=1}^{N} e_i' - 2 \cdot (2^{Q'}-1) \cdot DR \cdot \sum_{i=1}^{N} e_i}{2 \cdot (2^{Q}-1) \cdot (2^{Q'}-1) N}$$

where N represents a number of neighboring encoded data to use, MIN' represents the MIN value of the neighboring block, DR and DR' respectively represents the DR value of the block and the neighboring block, Q represents a number of quantization bits used to encode the block, Q' represents a number of quantization bits used to encode the neighboring block, $e_i$ represents the encoded data (e.g., Qcodes) and e'i represents the encoded neighboring data, such as the encoded data, of the neighboring block.

If the DR value is lost/damaged, the MIN value and Q codes of the block and the DR, MIN and Q codes of the neighboring block are used to estimate DR.

In one embodiment, DR may be estimated using a least squares estimation. For example:

an integer formula for non edge-matching ADRC:

$$DR = \frac{2^{Q+1} \cdot (MIN'-MIN) \cdot \sum_{i=1}^{N}(2e_i+1) + 2^{Q-Q'} \cdot DR' \cdot \sum_{i=1}^{N}(2e_i'+1) \cdot (2e_i+1)}{\sum_{i=1}^{N}(2e_i+1)^2}$$

an integer formula for edge-matching ADRC:

$$DR = \frac{(2^{Q}-1) \cdot (2^{Q'}-1)(2 \cdot MIN'-2 \cdot MIN+1) \cdot \sum_{i=1}^{N} e_i + 2 \cdot (2^{Q}-1) \cdot DR' \cdot \sum_{i=1}^{N}(e_i' \cdot e_i)}{2 \cdot (2^{Q'}-1) \cdot \sum_{i=1}^{N}(e_i)^2}$$

where N represents a number of neighboring encoded data to use, MIN and MIN' respectively represent the MIN value of the block and the neighboring block, Q represents a number of quantization bits used to encode, Q' represents a number of quantization bits used to encode the neighboring block, $e_i$ and $e_i'$ respectively represent the encoded data of the block and the neighboring block and DR' represents the dynamic range of the neighboring block.

In another embodiment, an alternate recovery formula may be used. DR may be estimated as the value that makes the sum of decoded values of the block equal to the sum of the decoded values of the neighboring block. For example, DR is determined according to the following equation:

Non edge-matching ADRC:

$$DR = \frac{2^Q \cdot \sum_{i=1}^{N}\left[DR'\cdot(2\cdot e'_i +1)+2^{Q'+1}\cdot(MIN'-MIN)\right]}{2^{Q'}\cdot \sum_{i=1}^{N}(2\cdot e_i +1)}$$

Edge-matching ADRC:

$$DR = \frac{(2^Q -1)\cdot \sum_{i=1}^{N}\left[DR'\cdot e'_i +(2^{Q'}-1)\cdot(MIN'-MIN)\right]}{(2^{Q'}-1)\cdot \sum_{i=1}^{N}e_i}$$

where N represents a number of neighboring encoded data to use, MIN and MIN' respectively represent the MIN value of the block and the neighboring block, Q represents a number of quantization bits used to encode, Q' represents a number of quantization bits used to encode the neighboring block, $e_i$ and $e_i'$ respectively represent the encoded data of the block and the neighboring block and DR' represents the dynamic range of the neighboring block.

If CEN and DR are used to decode the Q codes, and the CEN value is lost/damaged, the DR value and Q codes of the block and the DR, CEN and Q codes of the neighboring block are used to estimate the CEN value using encoded data.

CEN may be estimated as the value that minimizes an average difference between decoded values from the block and corresponding decoded values from at least one neighboring block. In one embodiment, CEN may be estimated using a least squares estimation. For example, CEN may be determined as follows:

Non edge-matching ADRC:

$$CEN = \frac{2^{Q+Q'}\cdot N\cdot(2\cdot CEN'+DR-DR')+2^Q\cdot DR\cdot \sum_{i=1}^{N}(2\cdot e_i'+1)-2^{Q'}\cdot DR'\cdot \sum_{i=1}^{N}(2\cdot e_i +1)}{2^{Q+Q'+1}\cdot N}$$

Edge-matching ADRC:

$$CEN = \frac{(2^Q -1)\cdot(2^{Q'}-1)\cdot N\cdot(2\cdot CEN'+DR-DR'+1)+2\cdot(2^Q -1)\cdot DR\cdot \sum_{i=1}^{N}e_i'-2\cdot(2^{Q'}-1)\cdot DR'\cdot \sum_{i=1}^{N}e_i}{2\cdot(2^Q -1)\cdot(2^{Q'}-1)\,N}$$

where N represents a number of neighboring encoded data to use, CEN' represents the CEN value of the neighboring block, DR and DR' respectively represents the DR value of the block and the neighboring block, Q represents a number of quantization bits used to encode the block, Q' represents a number of quantization bits used to encode the neighboring block, $e_i$ represents the encoded data (e.g., Qcodes) and $e_i'$ represents the encoded neighboring data, such as the encoded data, of the neighboring block.

If the DR value is lost/damaged, the CEN value and Q codes of the block and the DR, CEN and Q codes of the neighboring block are used to estimate DR.

In one embodiment, DR may be estimated using a least squares estimation. For example:

an integer formula for non edge-matching ADRC:

$$DR = \frac{2^Q \cdot (2 \cdot CEN' - 2 \cdot CEN + DR - DR') \cdot \sum_{i=1}^{N}(2 \cdot e_i + 1) + 2^{Q-Q'} \cdot DR' \cdot \sum_{i=1}^{N}(2 \cdot e_i' + 1)(2 \cdot e_i + 1)}{\sum_{i=1}^{N}(2 \cdot e_i + 1)^2}$$

an integer formula for edge-matching ADRC:

$$DR = \frac{(2^Q - 1) \cdot (2^{Q'} - 1)(2 \cdot CEN' - 2 \cdot CEN + DR - DR' + 1) \cdot \sum_{i=1}^{N} e_i + 2 \cdot (2^Q - 1) \cdot DR' \cdot \sum_{i=1}^{N}(e_i' \cdot e_i)}{2 \cdot (2^{Q'} - 1) \cdot \sum_{i=1}^{N}(e_i)^2}$$

where N represents a number of neighboring encoded data to use, CEN and CEN' respectively represent the MIN value of the block and the neighboring block, Q represents a number of quantization bits used to encode, Q' represents a number of quantization bits used to encode the neighboring block, $e_i$ and $e_i'$ respectively represent the encoded data of the block and the neighboring block and DR' represents the dynamic range of the neighboring block.

In another embodiment, an alternate recovery formula may be used. DR may be estimated as the value that makes the sum of decoded values of the block equal to the sum of the decoded values of the neighboring block. For example, DR is determined according to the following equation:

Non edge-matching ADRC:

$$DR = \frac{2^Q \cdot \sum_{i=1}^{N}\left[DR' \cdot (2e_i' + 1) + 2^{Q'} \cdot (2 \cdot CEN' - 2 \cdot CEN + DR - DR')\right]}{2^{Q'} \cdot \sum_{i=1}^{N}(2e_i + 1)}$$

Edge-matching ADRC:

$$DR = \frac{(2^Q - 1) \cdot \sum_{i=1}^{N}\left[2 \cdot DR' \cdot e_i' + (2^{Q'} - 1) \cdot (2 \cdot CEN' - 2 \cdot CEN + DR - DR')\right]}{2 \cdot (2^{Q'} - 1) \cdot \sum_{i=1}^{N} e_i}$$

where N represents a number of neighboring encoded data to use, CEN and CEN' respectively represent the CEN value of the block and the neighboring block, Q represents a number of quantization bits used to encode, Q' represents a number of quantization bits used to encode the neighboring block, $e_i$ and $e_i'$ respectively represent the encoded data of the block and the neighboring block and DR' represents the dynamic range of the neighboring block.

Other embodiments are also contemplated. For example, if MIN and MAX are used as compression constants, and one of them is damaged, DR is estimated and the compression constant is computed from the estimated DR. Furthermore, if MAX and DR are used, processing similar to MIN and DR described herein is used. Furthermore, other constants specifically not identified herein may be used. It is contemplated that other constant levels may function similar to MIN and appropriate equations would be derived therefrom.

In an alternate embodiment, variables used to determine other compression constants are also used to determine other compression constants discussed herein. For example, for data encoded using ADRC, the Qbit and motion flag values utilize the following variables:

$$X = \sum_{i=1}^{N} e_i$$

$$Y = \sum_{i=1}^{N} e_i{}'$$

where $e_i$ and $e_i{}'$ respectively represent the encoded data of the block and the neighboring block. As a large percentage of the hardware is devoted to computing the above sums (because the sums may be taken over N usable neighboring relations), the complexity of MIN and DR estimation circuits may be greatly reduced by inputting X and Y values where applicable.

Thus, in one embodiment, for example, using X and Y, MIN and DR may be determined as follows:

Non edge-matching ADRC:

$$MIN = \frac{2^{Q+Q'-1} \cdot N \cdot MIN' + 2^{Q-2} \cdot DR' \cdot (2 \cdot Y + N) - 2^{Q'-2} \cdot DR \cdot (2 \cdot X + N)}{2^{Q+Q'-1} \cdot N}.$$

$$DR = \frac{2^{Q} \cdot \left[2^{Q'-1} \cdot N \cdot (MIN' - MIN) + DR' \cdot (2 \cdot Y + N)\right]}{2^{Q'} \cdot (2 \cdot X + N)}$$

Edge-matching ADRC:

$$MIN = \frac{(2^{Q}-1) \cdot (2^{Q'}-1) \cdot N \cdot (2 \cdot MIN' + 1) + 2 \cdot (2^{Q}-1) \cdot DR' \cdot Y - 2 \cdot (2^{Q'}-1) \cdot DR \cdot X}{2 \cdot (2^{Q}-1) \cdot (2^{Q'}-1) \cdot N}$$

$$DR = \frac{(2^{Q}-1) \cdot \left[(2^{Q'}-1) \cdot (MIN' - MIN) + DR' \cdot Y\right]}{(2^{Q'}-1) \cdot X}$$

where N represents the number of neighboring data, Q and Q' respectively represent the Q bit number of the block and the neighboring block, MIN' represents the MIN value of the neighboring block, DR and DR' respectively represent the DR of the block and neighboring block.

In an alternate embodiment, using X and Y, CEN and DR may be determined as follows:

Non edge-matching ADRC:

$$CEN = \frac{2^{Q+Q'-2} \cdot N \cdot (2 \cdot CEN' + DR - DR') + 2^{Q-2} \cdot DR' \cdot (2 \cdot Y + N) - 2^{Q'-2} \cdot DR \cdot (2 \cdot X + N)}{2^{Q+Q'-1} \cdot N}$$

$$DR = \frac{2^{Q} \cdot \left[2^{Q'} \cdot N \cdot (2 \cdot CEN' - 2 \cdot CEN + DR - DR') + DR' \cdot (2 \cdot Y + N)\right]}{2^{Q'} \cdot (2 \cdot X + N)}$$

Edge-Matching ADRC:

$$CEN = \frac{(2^Q - 1) \cdot (2^Q - 1) \cdot N \cdot (2 \cdot CEN + DR - DR + 1) + 2 \cdot (2^Q - 1) \cdot DR \cdot Y - 2 \cdot (2^Q - 1) \cdot DR \cdot X}{2 \cdot (2^Q - 1) \cdot (2^Q - 1) \cdot N}$$

$$DR = \frac{(2^Q - 1) \cdot \left[ (2^Q - 1) \cdot (2 \cdot CEN - 2 \cdot CEN + DR - DR) + 2 \cdot DR \cdot Y \right]}{2 \cdot (2^Q - 1) \cdot X}$$

In the present embodiments, the numerator may be clipped such that n=max(0,n).

The numerator and denominator of the above equations may be large (e.g. 24 bits), thus, a general purpose divider to accommodate a range of values would require much hardware. It has been determined that certain efficiencies can be realized without compromising on the effectiveness of the results. As the allowed ranges of the compression values (e.g. MIN and DR) are restricted to certain ranges (e.g. 0 - 255 for one implementation), only a low precision (e.g. 8 bit) is required. It has also been determined that leading zeros can be eliminated without changing the accuracy of the result and the least significant bit can be truncated with only a minor effect on the result.

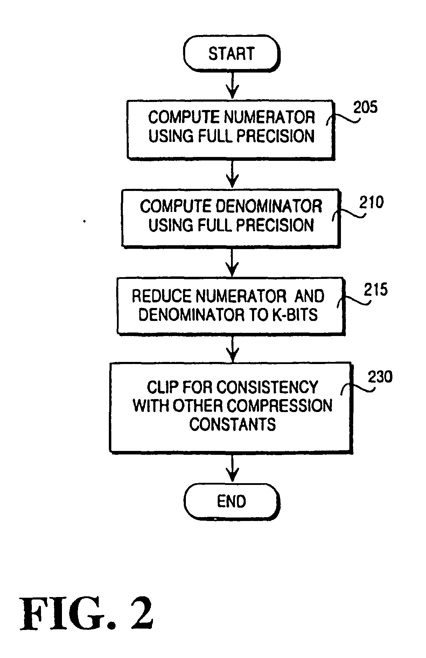

Thus, an alternate embodiment is described with reference to Figure 2. In this embodiment, the steps can be performed quickly in hardware logic. As noted above the equations require a division operation to be performed; therefore, a numerator and denominator of the quotient will be referred to in the following discussion.

At step 205, the numerator of one of the above formulae is computed using full precision. At step 210, the denominator is computed using full precision. At step 215, the numerator and denominator are reduced by shifting off the least significant bit until both are at least K-bits in length (i.e., until K-bits or less in length). In the present embodiment, the numerator and denominator are shifted the same number of bits. However, in alternate embodiments, the numerator and denominator maybe shifted a different number of bits. In such an embodiment, compensation would be made elsewhere for the bit-shift differential.

Thus, in the present embodiment, while ($n \geq 2^K$ or $d \geq 2^K$), then
n/2 (shift off LSB)
d/2 (shift off LSB)

where n represents the value of the numerator and d represents the value of the denominator.

A value of K is selected such that integer division can be performed using cost efficient logic while maintaining an acceptable image quality. In one embodiment, K is selected such that the maximum error is not visually detectable, e.g., the maximum error is not greater than 3%. In the present embodiment in which an 8 bit encoding is used, K is selected to be 13.

At step 230, the value is clipped for consistency with the auxiliary information available, for example other available compression constants. In the present example, the value is clipped to satisfy the allowable range of values. For example, for 8 bit ADRC:

non edge-matching ADRC:

$$MIN + DR \leq 254$$

$$CEN + DR/2 \leq 254$$

edge-matching ADRC:

$$MIN + DR \leq 255$$

$$CEN + DR/2 \leq 255$$

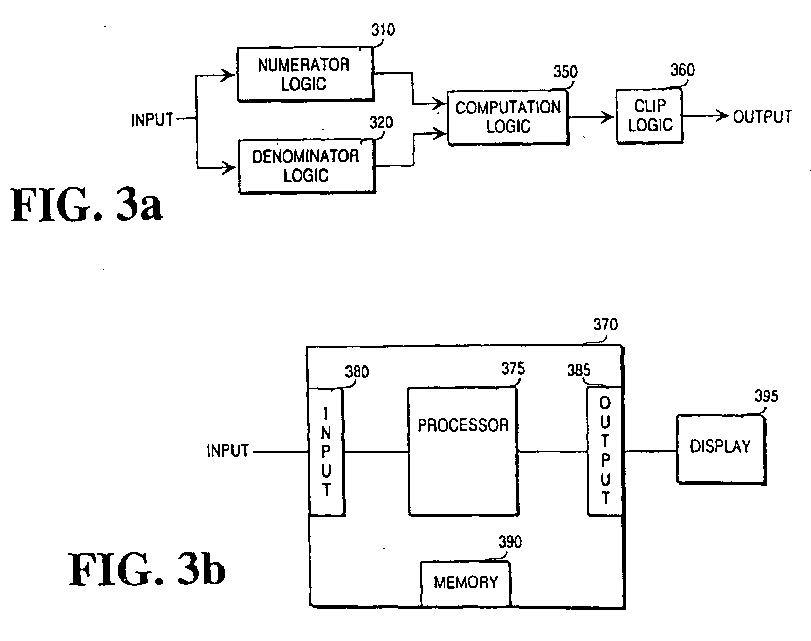

One embodiment of the system of the present invention is illustrated in Figure 3a. Figure 3a is a simplified functional block diagram of estimator circuitry that may be utilized to implement the processes described herein. For example, the circuitry may be implemented in specially configured logic, such as large scale integration (LSI) logic or programmable gate arrays. Alternately, as is illustrated in Figure 3b, the circuitry may be implemented as code executed by a dedicated, specially configured or general purpose processor, which executes instructions stored in a memory or other storage device. Furthermore, the present invention may be implemented as a combination of the above.

Referring to Figure 3a, numerator logic 310 determines the full precision value of the numerator portion of the computation performed to estimate a lost/damaged compression constant in the encoded domain. Denominator logic 320 similarly determines a full precision value of the denominator portion of the computation. In one embodiment, K-bit shift registers (not shown) shift out the least significant bits of the values generated by logic 310, 320 until the numerator and denominator are each K-bits in length. Alternately, the shift operation may be performed by computation logic 350. As described earlier, K is chosen, for example, empirically, such that the amount of logic/hardware required to perform subsequent operations is minimized for efficiency while maintaining an acceptable level of precision.

Computation logic 350 performs an integer division of the numerator and denominator. Clip logic 360 is optionally included to clip the output of computation logic 350 to be consistent with other available compression constants. Thus, using this structure, a fast, cost efficient circuit is provided for estimating lost/damaged compression constants.

The output of the circuit is preferably coupled to additional logic (not shown) which decodes using data including the recovered compression constant. In one embodiment in which the data is image data, the decoded data is used to drive a display device.

An alternate embodiment of the circuit for recovering lost/damaged compression constants is shown in Figure 3b. The methods described herein can be implemented on a specially configured or general purpose processor system 370. Instructions are stored in the memory 390 and accessed by the processor 375 to perform many of the steps described herein. An input 380 receives the input bitstream and forwards the data to the processor 375. The output 385 outputs the data. In one embodiment, the output may consist of the decoded data, such as image data decoded once the compression constant is recovered, sufficient to drive an external device such as display 395. In another embodiment, the output 385 outputs the recovered compression constant. The recovered compression constant is then input to other circuitry (not shown) to generate the decoded data.

Although the present invention is discussed with respect to image data, the present invention may be used with any form of correlated data, including without limitation photographs or other two-dimensional static images, holograms, or other three-dimensional static images, video or other two-dimensional moving images, three-dimensional moving images, a monaural sound stream, or sound separated into a number of spatially related streams, such as stereo.

The invention has been described in conjunction with the preferred embodiment. It is evident that numerous alternatives, modifications, variations and uses will be apparent to those skilled in the art in light of the foregoing description.

## Claims

1.  A method for recovery of at least one lost/damaged compression constant for a block of encoded image data, said method comprising estimating during decoding of the block a compression constant of the block using encoded data of at least one neighboring block of data, a compression constant that represents a central data value within a dynamic range of raw unencoded data values for the at least one neighboring block, and at least one recoverable compression constant of the block other than said compression constant being estimated;
    wherein each block comprises compression constants selected from the group comprising MIN, CEN, DR and MAX, wherein MIN represents a minimum data value in the block, CEN represents a central value, DR represents a dynamic range of the block and MAX represents a maximum data value in the block.

2.  The method as set forth in claim 1, wherein the compression constant is determined using a difference function between encoded data of the block of encoded data and the neighboring block of data.

3.  The method as set forth in claim 1, wherein the compression constant is determined using a least squares estimation.

4.  The method as set forth in claim 1, wherein the compression constant is determined as a value that makes a sum of decoded values of the block equal to a sum of decoded values of the neighboring block.

5. The method as set forth in claim 1, wherein estimating comprises determining MIN according to a formula selected from the group comprising:

$$MIN = \frac{2^{Q+Q'+1} \cdot N \cdot MIN' + 2^Q \cdot DR' \cdot \sum_{i=1}^{N}(2 \cdot e_i' + 1) - 2^Q \cdot DR \cdot \sum_{i=1}^{N}(2 \cdot e_i + 1)}{2^{Q+Q'+1} \cdot N};$$

and

$$MIN = \frac{(2^Q - 1) \cdot (2^{Q'} - 1) N \cdot (2 \cdot MIN' + 1) + 2 \cdot (2^Q - 1) \cdot DR' \cdot \sum_{i=1}^{N} e_i' - 2 \cdot (2^{Q'} - 1) \cdot DR \cdot \sum_{i=1}^{N} e_i}{2 \cdot (2^Q - 1) \cdot (2^{Q'} - 1) \cdot N}$$

where N represents a number of neighboring encoded data to use, MIN' represents the MIN value of the neighboring block, DR and DR' respectively represents the DR value of the block and the neighboring block, Q represents a number of quantization bits used to encode the block, Q' represents a number of quantization bits used to encode the neighboring block, $e_i$ represents the encoded data (e.g., Qcodes) and e'i represents the encoded neighboring data, such as the encoded data, of the neighboring block

6. The method as set forth in claim 1, wherein estimating comprises determining DR according to a formula selected from the group comprising:

$$DR = \frac{2^Q \cdot (2 \cdot CEN' - 2 \cdot CEN + DR - DR') \cdot \sum_{i=1}^{N}(2 \cdot e_i + 1) + 2^{Q-Q'} \cdot DR' \cdot \sum_{i=1}^{N}(2 \cdot e_i' + 1) \cdot (2 \cdot e_i + 1)}{\sum_{i=1}^{N}(2 \cdot e_i + 1)^2},$$

$$DR = \frac{(2^Q - 1) \cdot (2^{Q'} - 1)(2 \cdot CEN' - 2 \cdot CEN + DR - DR' + 1) \cdot \sum_{i=1}^{N} e_i + 2 \cdot (2^Q - 1) \cdot DR' \cdot \sum_{i=1}^{N}(e_i' \cdot e_i)}{2 \cdot (2^Q - 1) \cdot \sum_{i=1}^{N}(e_i)^2},$$

$$DR = \frac{2^Q \cdot \sum_{i=1}^{N}[DR' \cdot (2e_i' + 1) + 2^{Q'} \cdot (2 \cdot CEN' - 2 \cdot CEN + DR - DR')]}{2^{Q'} \cdot \sum_{i=1}^{N}(2e_i + 1)}$$

and

$$DR = \frac{\left(2^{Q}-1\right) \cdot \sum_{i=1}^{N}\left[2 \cdot DR' \cdot e'_{i} + \left(2^{Q'}-1\right) \cdot \left(2 \cdot CEN'-2 \cdot CEN + DR - DR'\right)\right]}{2 \cdot \left(2^{Q'}-1\right) \cdot \sum_{i=1}^{N} e_{i}}$$

where N represents a number of neighboring encoded data to use, CEN and CEN' respectively represent the CEN value of the block and the neighboring block, Q represents a number of quantization bits used to encode, Q' represents a number of quantization bits used to encode the neighboring block, $e_i$ and $e_i'$ respectively represent the encoded data of the block and the neighboring block and DR' represents the dynamic range of the neighboring block.

7. The method as set forth in claim 1, wherein estimating comprises determining CEN according to a formula selected from the group comprising:

$$CEN = \frac{2^{Q+Q'} \cdot N \cdot \left(2 \cdot CEN' + DR - DR'\right) + 2^{Q} \cdot DR' \cdot \sum_{i=1}^{N}\left(2 \cdot e_{i}'+1\right) - 2^{Q'} \cdot DR \cdot \sum_{i=1}^{N}\left(2 \cdot e_{i}+1\right)}{2^{Q+Q'+1} \cdot N}$$

and

$$CEN = \frac{\left(2^{Q}-1\right) \cdot \left(2^{Q'}-1\right) \cdot N \cdot \left(2 \cdot CEN' + DR - DR' +1\right) + 2 \cdot \left(2^{Q}-1\right) \cdot DR' \cdot \sum_{i=1}^{N} e_{i}' - 2 \cdot \left(2^{Q'}-1\right) \cdot DR \cdot \sum_{i=1}^{N} e_{i}}{2 \cdot \left(2^{Q}-1\right) \cdot \left(2^{Q'}-1\right) \cdot N}$$

where N represents a number of neighboring encoded data to use, CEN' represents the CEN value of the neighboring block, DR and DR' respectively represents the DR value of the block and the neighboring block, Q represents a number of quantization bits used to encode the block, Q' represents a number of quantization bits used to encode the neighboring block, $e_i$ represents the encoded data (e.g., Qcodes) and $e_i'$ represents the encoded neighboring data of the neighboring block.

8. The method as set forth in claim 1, wherein integer computations are used to recover the lost/damaged compression constant.

9. The method as set forth in claim 1, wherein MIN is estimated as the value that minimizes an average difference between a decoded value of the block and a decoded value of the neighboring block.

10. The method as set forth in claim 1, wherein DR is estimated as the value that makes a sum of decoded values of the block equal to the sum of decoded values of the neighboring block.

11. The method as set forth in claim 1, where CEN is estimated as the value that minimizes an average difference between a decoded value of the block and a decoded value of the neighboring block.

12. The method as set forth in claim 1, wherein the step of estimating comprises calculating a quotient having a numerator and a denominator and wherein said quotient is computed by forming the numerator and denominator of the equation in full precision, shifting off a least significant bit from the numerator and the denominator until the numerator and the denominator are less than $2^K$, and performing K-bit division, where K is a constant.

13. A system for recovering at least one lost/damaged compression constant for a block of encoded image data comprising an estimator configured to receive as input encoded data of at least one neighboring block of data, a compression constant that represents a central data value within a dynamic range of raw unencoded data values for the at least one neighboring block, and at least one recoverable compression constant of the block other than said compression constant being estimated; and
estimate, during decoding of the block, a compression constant using the input;
wherein each block comprises compression constants selected from the group comprising MIN, CEN, DR and MAX compression constants, wherein MIN represents a minimum data value in the block, CEN represents a central value, DR represents a dynamic range of the block and MAX represents a maximum data value in the block.

14. The system as set forth in claim 13, wherein the estimator is chosen from a group comprising an estimation logic circuit, a processor, and a combination of estimation logic and a processor.

15. The system as set forth in claim 13, wherein the compression constant is determined using a difference function between encoded data of the block of encoded data and the neighboring block of data.

16. The system as set forth in claim 13, wherein the compression constant is determined using a least squares estimation.

17. The system as set forth in claim 13, wherein the compression constant is determined as a value that makes a sum of decoded values of the block equal to a sum of decoded values of the neighboring block.

18. The system as set forth in claim 13, wherein MIN is estimated according to a formula selected from the group comprising:

$$MIN = \frac{2^{Q+Q'+1} \cdot N \cdot MIN' + 2^{Q} \cdot DR' \cdot \sum_{i=1}^{N}(2 \cdot e_i' + 1) - 2^{Q'} \cdot DR \cdot \sum_{i=1}^{N}(2 \cdot e_i + 1)}{2^{Q+Q'+1} \cdot N},$$

and

$$MIN = \frac{(2^{Q} - 1) \cdot (2^{Q'} - 1) \, N \cdot (2 \cdot MIN' + 1) + 2 \cdot (2^{Q} - 1) \cdot DR' \cdot \sum_{i=1}^{N} e_i' - 2 \cdot (2^{Q'} - 1) \cdot DR \cdot \sum_{i=1}^{N} e_i}{2 \cdot (2^{Q} - 1) \cdot (2^{Q'} - 1) \, N}$$

where N represents a number of neighboring encoded data to use, MIN' represents the MIN value of the neighboring block, DR and DR' respectively represents the DR value of the block and the neighboring block, Q represents a number of quantization bits used to encode the block, Q' represents a number of quantization bits used to encode the neighboring block, $e_i$ represents the encoded data (e.g., Qcodes) and $e_i'$ represents the encoded neighboring data, such as the encoded data, of the neighboring block.

19. The system as set forth in claim 13, wherein DR is estimated according a formula selected from the group comprising:

$$DR = \frac{2^{Q} \cdot (2 \cdot CEN' - 2 \cdot CEN + DR - DR') \cdot \sum_{i=1}^{N}(2 \cdot e_i + 1) + 2^{Q-Q'} \cdot DR' \cdot \sum_{i=1}^{N}(2 \cdot e_i' + 1) \cdot (2 \cdot e_i + 1)}{\sum_{i=1}^{N}(2 \cdot e_i + 1)^2},$$

$$DR = \frac{(2^{Q} - 1) \cdot (2^{Q'} - 1) \, (2 \cdot CEN' - 2 \cdot CEN + DR - DR' + 1) \cdot \sum_{i=1}^{N} e_i + 2 \cdot (2^{Q} - 1) \cdot DR' \cdot \sum_{i=1}^{N}(e_i' \cdot e_i)}{2 \cdot (2^{Q} - 1) \cdot \sum_{i=1}^{N}(e_i)^2},$$

$$DR = \frac{2^{Q} \cdot \sum_{i=1}^{N}\left[DR' \cdot (2e'_i + 1) + 2^{Q'} \cdot (2 \cdot CEN' - 2 \cdot CEN + DR - DR')\right]}{2^{Q'} \cdot \sum_{i=1}^{N}(2e_i + 1)}$$

and

$$DR = \frac{(2^{Q} - 1) \cdot \sum_{i=1}^{N}\left[2 \cdot DR' \cdot e'_i + (2^{Q'} - 1) \cdot (2 \cdot CEN' - 2 \cdot CEN + DR - DR')\right]}{2 \cdot (2^{Q'} - 1) \cdot \sum_{i=1}^{N} e_i}$$

where N represents a number of neighboring encoded data to use, CEN and CEN' respectively represent the CEN value of the block and the neighboring block, Q represents a number of quantization bits used to encode, Q' represents a number of quantization bits used to encode the neighboring block, $e_i$ and $e_i'$ respectively represent the encoded data of the block and the neighboring block and DR' represents the dynamic range of the neighboring block.

20. The system as set forth in claim 13, wherein CEN is estimated according to a formula selected from the group comprising:

$$CEN = \frac{2^{Q+Q'} \cdot N \cdot (2 \cdot CEN' + DR - DR') + 2^{Q} \cdot DR' \cdot \sum_{i=1}^{N}(2 \cdot e_i' + 1) - 2^{Q'} \cdot DR \cdot \sum_{i=1}^{N}(2 \cdot e_i + 1)}{2^{Q+Q'+1} \cdot N}$$

and

$$CEN = \frac{(2^{Q} - 1) \cdot (2^{Q'} - 1) \cdot N \cdot (2 \cdot CEN' + DR - DR' + 1) + 2 \cdot (2^{Q} - 1) \cdot DR' \cdot \sum_{i=1}^{N} e_i' - 2 \cdot (2^{Q'} - 1) \cdot DR \cdot \sum_{i=1}^{N} e_i}{2 \cdot (2^{Q} - 1) \cdot (2^{Q'} - 1) \cdot N}$$

where N represents a number of neighboring encoded data to use, CEN' represents the CEN value of the neighboring block, DR and DR' respectively represents the DR value of the block and the neighboring block, Q represents a number of quantization bits used to encode the block, Q' represents a number of quantization bits used to encode the neighboring block, $e_i$ represents the encoded data (e.g., Qcodes) and $e_i'$ represents the encoded neighboring data of the neighboring block.

21. The system as set forth in claim 13, wherein integer computations are used to recover the lost/damaged compression constant.

22. The system as set forth in claim 13, wherein MIN is estimated as the value that minimizes an average difference between a decoded value of the block and a decoded value of a neighboring block.

23. The system as set forth in claim 13, wherein DR is estimated as the value that makes a sum of decoded values of the block equal to a sum of decoded values of the neighboring block.

24. The system as set forth in claim 13, wherein CEN is estimated as the value that minimizes an average difference between a decoded value of the block and a decoded value of a neighboring block.

**25.** The system as set forth in claim 13, wherein the estimation logic is operable to perform said estimation by calculating a quotient and wherein said estimation logic comprises:

full precision registers configured to store a numerator and a denominator of said quotient;
shift logic configured to shift off the least significant bit until the numerator and the denominator are less than $2^K$; and
division logic configured to perform K-bit division, where K is a constant.

**26.** A computer readable medium containing executable instructions, which, when executed in a processing system, causes the system to recover at least one lost/damaged compression constant of a block of encoded image data, comprising estimating, during decoding of the block, a compression constant of the block using encoded data of at least one neighboring block of data, a compression constant that represents a central data value within a dynamic range of raw unencoded data values for the at least one neighboring block, and at least one recoverable compression constant of the block other than said compression constant being estimated;
wherein the encoded data comprises compression constants selected from the group comprising MIN, CEN, DR and MAX, wherein MIN represents a minimum data value in the block, CEN represents a central value, DR represents a dynamic range of the block and MAX represents a maximum data value in the block.

**27.** The computer readable medium as set forth in claim 26, wherein the compression constant is determined using a difference function between encoded data of the block of encoded data and the neighboring block of data.

**28.** The computer readable medium as set forth in claim 26, wherein the compression constant is determined using a least squares estimation.

**29.** The computer readable medium as set forth in claim 26, wherein the compression constant is determined as a value that makes a sum of decoded values of the block equal to a sum of decoded values of the neighboring block.

**30.** The computer readable medium as set forth in claim 26, wherein estimating comprises determining MIN according to a formula selected from the group comprising:

$$MIN = \frac{2^{Q+Q'+1} \cdot N \cdot MIN' + 2^Q \cdot DR' \cdot \sum_{i=1}^{N}(2 \cdot e_i' + 1) - 2^{Q'} \cdot DR \cdot \sum_{i=1}^{N}(2 \cdot e_i + 1)}{2^{Q+Q'+1} \cdot N},$$

$$MIN = \frac{(2^Q - 1) \cdot (2^{Q'} - 1) N \cdot (2MIN' + 1) + 2 \cdot (2^Q - 1) \cdot DR' \cdot \sum_{i=1}^{N} e_i' - 2 \cdot (2^{Q'} - 1) DR \cdot \sum_{i=1}^{N} e_i}{2 \cdot (2^Q - 1) \cdot (2^{Q'} - 1) N}$$

where N represents a number of neighboring encoded data to use, MIN' represents the MIN value of the neighboring block, DR and DR' respectively represents the DR value of the block and the neighboring block, Q represents a number of quantization bits used to encode the block, Q' represents a number of quantization bits used to encode the neighboring block, $e_i$ represents the encoded data (e.g., Qcodes) and $e_i'$ represents the encoded neighboring data, such as the encoded data, of the neighboring block.

**31.** The computer readable medium as set forth in claim 26, wherein estimating comprises determining DR according to a formula selected from the group comprising:

$$DR = \frac{2^Q \cdot (2 \cdot CEN' - 2 \cdot CEN + DR - DR') \cdot \sum_{i=1}^{N}(2 \cdot e_i + 1) + 2^{Q-Q'} \cdot DR' \cdot \sum_{i=1}^{N}(2 \cdot e_i' + 1) \cdot (2 \cdot e_i + 1)}{\sum_{i=1}^{N}(2 \cdot e_i + 1)^2},$$

$$DR = \frac{\left(2^{Q}-1\right)\cdot\left(2^{Q'}-1\right)\left(2\cdot CEN'-2\cdot CEN + DR - DR'+1\right)\cdot\sum_{i=1}^{N}e_i + 2\cdot\left(2^{Q}-1\right)\cdot DR'\cdot\sum_{i=1}^{N}\left(e_i'\cdot e_i\right)}{2\cdot\left(2^{Q'}-1\right)\cdot\sum_{i=1}^{N}\left(e_i\right)^2},$$

$$DR = \frac{2^{Q}\cdot\sum_{i=1}^{N}\left[DR'\cdot\left(2e_i'+1\right)+2^{Q'}\cdot\left(2\cdot CEN'-2\cdot CEN + DR - DR'\right)\right]}{2^{Q'}\cdot\sum_{i=1}^{N}\left(2e_i+1\right)}$$

and

$$DR = \frac{\left(2^{Q}-1\right)\cdot\sum_{i=1}^{N}\left[2\cdot DR'\cdot e_i'+\left(2^{Q'}-1\right)\cdot\left(2\cdot CEN'-2\cdot CEN + DR - DR'\right)\right]}{2\cdot\left(2^{Q'}-1\right)\cdot\sum_{i=1}^{N}e_i}$$

where N represents a number of neighboring encoded data to use, CEN and CEN' respectively represent the CEN value of the block and the neighboring block, Q represents a number of quantization bits used to encode, Q' represents a number of quantization bits used to encode the neighboring block, $e_i$ and $e_i'$ respectively represent the encoded data of the block and the neighboring block and DR' represents the dynamic range of the neighboring block.

32. The computer readable medium as set forth in claim 26, wherein CEN is estimated according to a formula selected from the group comprising:

$$CEN = \frac{2^{Q+Q'}\cdot N\cdot\left(2\cdot CEN'+DR - DR'\right)+2^{Q}\cdot DR'\cdot\sum_{i=1}^{N}\left(2\cdot e_i'+1\right)-2^{Q'}\cdot DR\cdot\sum_{i=1}^{N}\left(2\cdot e_i+1\right)}{2^{Q+Q'+1}\cdot N}$$

$$CEN = \frac{\left(2^{Q}-1\right)\cdot\left(2^{Q'}-1\right)\cdot N\cdot\left(2\cdot CEN'+DR - DR'+1\right)+2\cdot\left(2^{Q}-1\right)\cdot DR'\cdot\sum_{i=1}^{N}e_i'-2\cdot\left(2^{Q'}-1\right)\cdot DR\cdot\sum_{i=1}^{N}e_i}{2\cdot\left(2^{Q}-1\right)\cdot\left(2^{Q'}-1\right)\cdot N}$$

where N represents a number of neighboring encoded data to use, CEN' represents the CEN value of the neighboring block, DR and DR' respectively represents the DR value of the block and the neighboring block, Q represents a number of quantization bits used to encode the block, Q' represents a number of quantization bits used to encode the neighboring block, $e_i$ represents the encoded data (e.g., Qcodes) and $e_i'$ represents the encoded neighboring data of the neighboring block.

33. The computer readable medium as set forth in claim 26, wherein MIN is estimated as the value that minimizes an average difference between a decoded value of the block and a decoded value of the neighboring block.

34. The computer readable medium as set forth in claim 26, wherein DR is estimated as the value that makes a sum of decoded values of the block equal to a sum of decoded values of the neighboring block.

35. The computer readable medium as set forth in claim 26, wherein CEN is estimated as the value that minimizes an average difference between a decoded value of the block and a decoded value of the neighboring block.

36. The computer readable medium as set forth in claim 26, wherein integer computations are used to recover the lost/damaged compression constants.

37. The computer readable medium as set forth in claim 26, wherein the equation is computed by forming the numerator and denominator of the equation in full precision registers, shifting off the least significant bit until the numerator and the denominator are less than $2^K$, and performing K-bit division, where K is a constant.

38. An apparatus for recovering at least one lost/damaged compression constant for a block of encoded image data comprising means for estimating, during decoding of the block, a compression constant of the block using encoded data of at least one neighboring block of data, a compression constant that represents a central data value within a dynamic range of raw unencoded data values for the at least one neighboring block, and at least one recoverable compression constant of the block other than said compression constant being estimated;
wherein each block comprises MIN, CEN, DR and MAX compression constants selected from the group compressions, wherein MIN represents a minimum data value in the block, CEN represents a central value DR represents a dynamic range of the block and MAX represents a maximum data value in the block.

39. The apparatus as set forth in claim 38, wherein estimating is performed in accordance with an equation computed by forming the numerator and denominator of the equation in full precision, shifting off a least significant bit from the numerator and the denominator until the numerator and the denominator are less than $2^K$, and performing K-bit division, where K is a constant.

**Patentansprüche**

1. Verfahren zur Zurückgewinnung wenigstens einer verlorenen/beschädigten Kompressionskonstante für einen Block von codierten Bilddaten, wobei das Verfahren aufweist: Schätzen während einer Decodierung des Blocks einer Kompressionskonstante des Blocks unter Benutzung von codierten Daten wenigstens eines benachbarten Blocks von Daten, einer Kompressionskonstante, die einen zentralen Datenwert in einem Dynamikbereich von uncodierten Rohdatenwerten für den wenigstens einen benachbarten Block repräsentiert, und wenigstens einer anderen zurückgewinnbaren Kompressionskonstante des Blocks als die geschätzte Kompressionskonstante,
wobei jeder Block Kompressionskonstanten aufweist, die aus einer Gruppe aufweisen MIN, CEN, DR und MAX ausgewählt sind, wobei MIN einen Minimumdatenwert im Block repräsentiert, CEN einen zentralen Wert repräsentiert, DR einen Dynamikbereich des Blocks repräsentiert und MAX einen Maximumdatenwert im Block repräsentiert.

2. Verfahren nach Anspruch 1, wobei die Kompressionskonstante bestimmt wird unter Benutzung einer Differenzfunktion zwischen codierten Daten des Blocks von codierten Daten und des benachbarten Blocks von Daten.

3. Verfahren nach Anspruch 1, wobei die Kompressionskonstante bestimmt wird unter Benutzung wenigstens einer Kleinstquadrateschätzung.

4. Verfahren nach Anspruch 1, wobei die Kompressionskonstante bestimmt wird als ein Wert, der eine Summe von decodierten Werten des Blocks gleich einer Summe von decodierten Werten des benachbarten Blocks macht.

5. Verfahren nach Anspruch 1, wobei Schätzen aufweist: Bestimmen von MIN entsprechend einer Formel, die aus der Gruppe aufweisend

2

und

$$MIN = \frac{(2^Q -1)\cdot(2^{Q'} -1)\cdot N\cdot(2\cdot MIN'+1) + 2\cdot(2^Q -1)\cdot DR'\cdot\sum_{i=1}^{N} e_i' - 2\cdot(2^{Q'} -1)\cdot DR\cdot\sum_{i=1}^{N} e_i}{2\cdot(2^Q -1)\cdot(2^{Q'} -1)\cdot N}$$

ausgewählt ist, wobei N eine Anzahl von zu benutzenden benachbarten codierten Daten repräsentiert, MIN' den MIN-Wert des benachbarten Blocks repräsentiert, DR und DR' den DR-Wert des Blocks und des benachbarten Blocks repräsentieren, Q eine Anzahl von zum Codieren des Blocks benutzten Quantisierungsbits repräsentiert, Q' eine Anzahl von zum Codieren des benachbarten Blocks benutzten Quantisierungsbits repräsentiert, $e_i$ die codierten Daten (beispielsweise QCodes) repräsentiert und $e_i'$ die codierten benachbarten Daten, wie beispielsweise die codierten Daten, des benachbarten Blocks repräsentiert.

6. Verfahren nach Anspruch 1, wobei Schätzen aufweist: bestimmen von DR entsprechend einer Formal, die aus der Gruppe aufweisend

$$DR = \frac{2^Q\cdot(2\cdot CEN'-2\cdot CEN + DR - DR')\cdot\sum_{i=1}^{N}(2\cdot e_i +1) + 2^{Q-Q'}\cdot DR'\cdot\sum_{i=1}^{N}(2\cdot e_i'+1)\cdot(2\cdot e_i +1)}{\sum_{i=1}^{N}(2\cdot e_i +1)^2}$$

,

$$DR = \frac{(2^Q -1)\cdot(2^{Q'} -1)\cdot(2\cdot CEN'-2\cdot CEN + DR - DR'+1)\cdot\sum_{i=1}^{N} e_i + 2\cdot(2^Q -1)\cdot DR'\cdot\sum_{i=1}^{N}(e_i'\cdot e_i)}{2\cdot(2^{Q'} -1)\cdot\sum_{i=1}^{N}(e_i)^2}$$

,

$$DR = \frac{2^Q\cdot\sum_{i=1}^{N}\left[DR'\cdot(2\cdot e_i'+1) + 2^{Q'}\cdot(2\cdot CEN'-2\cdot CEN + DR - DR')\right]}{2^{Q'}\cdot\sum_{i=1}^{N}(2\cdot e_i +1)}$$

und

$$DR = \frac{(2^Q -1)\cdot\sum_{i=1}^{N}\left[2\cdot DR'\cdot e_i'+(2^{Q'} -1)\cdot(2\cdot CEN'-2\cdot CEN + DR - DR')\right]}{2\cdot(2^{Q'} -1)\cdot\sum_{i=1}^{N} e_i}$$

ausgewählt ist, wobei N eine Anzahl von zu benutzenden benachbarten codierten Daten repräsentiert, CEN und CEN' den CEN-Wert des Blocks und des benachbarten Blocks repräsentieren, Q eine Anzahl von zum Codieren benutzten Quantisierungsbits repräsentiert, Q' eine Anzahl von zum Codieren des benachbarten Blocks benutzten

Quantisierungsbits repräsentiert, $e_i$ und $e_i$' die codierten Daten des Blocks und des benachbarten Blocks repräsentieren und DR' den Dynamikbereich des benachbarten Blocks repräsentiert.

7. Verfahren nach Anspruch 1, wobei Schätzen aufweist: Bestimmen von CEN entsprechen einer Formal, die aus der Gruppe aufweisend

$$CEN = \frac{2^{Q+Q'} \cdot N \cdot (2 \cdot CEN' + DR - DR') + 2^{Q} \cdot DR' \cdot \sum_{i=1}^{N}(2 \cdot e_i' + 1) - 2^{Q'} \cdot DR \cdot \sum_{i=1}^{N}(2 \cdot e_i + 1)}{2^{Q+Q'+1} \cdot N}$$

und

$$CEN = \frac{(2^{Q}-1) \cdot (2^{Q'}-1) \cdot N \cdot (2 \cdot CEN' + DR - DR' + 1) + 2 \cdot (2^{Q}-1) \cdot DR' \cdot \sum_{i=1}^{N} e_i' - 2 \cdot (2^{Q'}-1) \cdot DR \cdot \sum_{i=1}^{N} e_i}{2 \cdot (2^{Q}-1) \cdot (2^{Q'}-1) \cdot N}$$

ausgewählt ist, wobei N eine Anzahl von zu benutzenden benachbarten codierten Daten repräsentiert, CEN' den CEN-Wert des benachbarten Blocks repräsentiert, DR und DR' den DR-Wert des Blocks und des benachbarten Blocks repräsentieren, Q eine Anzahl von zum Codieren des Blocks benutzten Quantisierungsbits repräsentiert, Q' eine Anzahl von zum Codieren des benachbarten Blocks benutzten Quantisierungsbits repräsentiert, $e_i$ die codierten Daten (beispielsweise QCodes) repräsentiert und $e_i$' die codierten benachbarten Daten des benachbarten Blocks repräsentiert.

8. Verfahren nach Anspruch 1, wobei Ganzzahlberechnungen zum Zurückgewinnen der verlorenen/beschädigten Kompressionskonstante benutzt werden.

9. Verfahren nach Anspruch 1, wobei MIN geschätzt wird als der Wert, der eine mittlere Differenz zwischen einem decodierten Wert des Blocks und einem decodierten Wert des benachbarten Blocks minimiert.

10. Verfahren nach Anspruch 1, wobei DR geschätzt wird als der Wert, der eine Summe aus decodierten Werten des Blocks gleich der Summe aus decodierten Werten des benachbarten Blocks macht.

11. Verfahren nach Anspruch 1, wobei CEN geschätzt wird als der Wert, der eine mittlere Differenz zwischen einem decodierten Wert des Blocks und einem decodierten Wert des benachbarten Blocks minimiert.

12. Verfahren nach Anspruch 1, wobei der Schritt zum Schätzen aufweist: Berechnen eines Quotienten, der einen Zähler und einen Nenner aufweist, und wobei der Quotient berechnet wird durch Bilden des Zählers und Nenners der Gleichung in voller Präzision, Fortschieben eines niedrigstwertigen Bits vom Zähler und vom Nenner, bis der Zähler und der Nenner kleiner als $2^K$ sind, und Ausführen einer K-Bit-Division, wobei K eine Konstante ist.

13. System zur Zurückgewinnung wenigstens einer verlorenen/beschädigten Kompressionskonstante für einen Block von codierten Bilddaten, aufweisend einen Schätzer, der konfiguriert ist zum Empfangen als codierte Eingabedaten wenigstens eines benachbarten Blocks von Daten, einer Kompressionskonstante, die einen zentralen Datenwert in einem Dynamikbereich von uncodierten Rohdatenwerten für den wenigstens einen benachbarten Block repräsentiert, und wenigstens einer zurückgewinnbaren Kompressionskonstante des Blocks anders als die geschätzte Kompressionskonstante, und
Schätzen, während einer Decodierung des Blocks, einer Kompressionskonstante unter Benutzung der Eingabe, wobei jeder Block Kompressionskonstanten aufweist, die aus der Gruppe aufweisend MIN-, CEN-, DR- und MAX-Kompressionskonstanten ausgewählt sind, wobei MIN einen Minimumdatenwert im Block repräsentiert, CEN einen zentralen Wert repräsentiert, DR eine Dynamikbereich des Blocks repräsentiert und MAX einen Maximumdatenwert im Block repräsentiert.

14. System nach Anspruch 13, wobei der Schätzer gewählt ist aus einer eine Schätzungslogikschaltung, einen Prozessor und eine Kombination aus einer Schätzungslogik und einem Prozessor aufweisenden Gruppe.

**15.** System nach Anspruch 13, wobei die Kompressionskonstante bestimmt wird unter Benutzung einer Differenzfunktion zwischen codierten Daten des Blocks von codierten Daten und des benachbarten Blocks von Daten.

**16.** System nach Anspruch 13, wobei die Kompressionskonstante bestimmt wird unter Benutzung wenigstens einer Kleinstquadrateschätzung.

**17.** System nach Anspruch 13, wobei die Kompressionskonstante bestimmt wird durch einen Wert, der eine Summe aus decodierten Werten des Blocks gleich einer Summe aus decodierten Werten des benachbarten Blocks macht.

**18.** System nach Anspruch 13, wobei MIN geschätzt wird entsprechend einer Formyl, die aus der Gruppe aufweisend

$$MIN = \frac{2^{Q+Q'+1} \cdot N \cdot MIN' + 2^{Q} \cdot DR' \cdot \sum_{i=1}^{N}(2 \cdot e_i' + 1) - 2^{Q} \cdot DR \cdot \sum_{i=1}^{N}(2 \cdot e_i + 1)}{2^{Q+Q'+1} \cdot N}$$

und

$$MIN = \frac{(2^{Q}-1) \cdot (2^{Q'}-1) \cdot N \cdot (2 \cdot MIN'+1) + 2 \cdot (2^{Q}-1) \cdot DR' \cdot \sum_{i=1}^{N} e_i' - 2 \cdot (2^{Q'}-1) \cdot DR \cdot \sum_{i=1}^{N} e_i}{2 \cdot (2^{Q}-1) \cdot (2^{Q'}-1) \cdot N}$$

ausgewählt ist, wobei N eine Anzahl von zu benutzenden benachbarten codierten Daten repräsentiert, MIN' den MIN-Wert des benachbarten Blocks repräsentiert, DR und DR' den DR-Wert des Blocks und des benachbarten Blocks repräsentieren, Q eine Anzahl von zum Codieren des Blocks benutzten Quantisierungsbits repräsentiert, Q' eine Anzahl von zum Codieren des benachbarten Blocks benutzten Quantisierungsbits repräsentiert, $e_i$ die codierten Daten (beispielsweise QCodes) repräsentiert und $e_i'$ die codierten benachbarten Daten, wie beispielsweise die codierten Daten, des benachbarten Blocks repräsentiert.

**19.** System nach Anspruch 13, wobei DR geschätzt wird entsprechend einer Formel, die aus der Gruppe aufweisend

$$DR = \frac{2^{Q} \cdot (2 \cdot CEN' - 2 \cdot CEN + DR - DR') \cdot \sum_{i=1}^{N}(2 \cdot e_i + 1) + 2^{Q-Q'} \cdot DR' \cdot \sum_{i=1}^{N}(2 \cdot e_i' + 1) \cdot (2 \cdot e_i + 1)}{\sum_{i=1}^{N}(2 \cdot e_i + 1)^2}$$

$$DR = \frac{(2^{Q}-1) \cdot (2^{Q'}-1) \cdot (2 \cdot CEN' - 2 \cdot CEN + DR - DR' + 1) \cdot \sum_{i=1}^{N} e_i + 2 \cdot (2^{Q}-1) \cdot DR' \cdot \sum_{i=1}^{N}(e_i' \cdot e_i)}{2 \cdot (2^{Q'}-1) \cdot \sum_{i=1}^{N}(e_i)^2}$$

$$DR = \frac{2^Q \cdot \sum_{i=1}^{N} \left[ DR' \cdot (2 \cdot e_i' + 1) + 2^{Q'} \cdot (2 \cdot CEN' - 2 \cdot CEN + DR - DR') \right]}{2^{Q'} \cdot \sum_{i=1}^{N} (2 \cdot e_i + 1)}$$

und

$$DR = \frac{(2^Q - 1) \cdot \sum_{i=1}^{N} \left[ 2 \cdot DR' \cdot e_i' + (2^{Q'} - 1) \cdot (2 \cdot CEN' - 2 \cdot CEN + DR - DR') \right]}{2 \cdot (2^{Q'} - 1) \cdot \sum_{i=1}^{N} e_i}$$

ausgewählt ist, wobei N eine Anzahl von zu benutzenden benachbarten codierten Daten repräsentiert, CEN und CEN' den CEN-Wert des Blocks und des benachbarten Blocks repräsentieren, Q eine Anzahl von zum Codieren benutzten Quantisierungsbits repräsentiert, Q' eine Anzahl von zum Codieren des benachbarten Blocks benutzten Quantisierungsbits repräsentiert, $e_i$ und $e_i'$ die codierten Daten des Blocks und des benachbarten Blocks repräsentieren und DR' den Dynamikbereich des benachbarten Blocks repräsentiert.

**20.** System nach Anspruch 13, wobei CEN geschätzt wird entsprechend einer Formel, die aus der Gruppe aufweisend

$$CEN = \frac{2^{Q+Q'} \cdot N \cdot (2 \cdot CEN' + DR - DR') + 2^Q \cdot DR' \cdot \sum_{i=1}^{N} (2 \cdot e_i' + 1) - 2^{Q'} \cdot DR \cdot \sum_{i=1}^{N} (2 \cdot e_i + 1)}{2^{Q+Q'+1} \cdot N}$$

und

$$CEN = \frac{(2^Q - 1) \cdot (2^{Q'} - 1) \cdot N \cdot (2 \cdot CEN' + DR - DR' + 1) + 2 \cdot (2^Q - 1) \cdot DR' \cdot \sum_{i=1}^{N} e_i' - 2 \cdot (2^{Q'} - 1) \cdot DR \cdot \sum_{i=1}^{N} e_i}{2 \cdot (2^Q - 1) \cdot (2^{Q'} - 1) \cdot N}$$

ausgewählt ist, wobei N eine Anzahl von zu benutzenden benachbarten codierten Daten repräsentiert, CEN' den CEN-Wert des benachbarten Blocks repräsentiert, DR und DR' den DR-Wert des Blocks und des benachbarten Blocks repräsentieren, Q eine Anzahl von zum Codieren des Blocks benutzten Quantisierungsbits repräsentiert, Q' eine Anzahl von zum Codieren des benachbarten Blocks benutzten Quantisierungsbits repräsentiert, $e_i$ die codierten Daten (beispielsweise QCodes) repräsentiert und $e_i'$ die codierten benachbarten Daten des benachbarten Blocks repräsentiert.

**21.** System nach Anspruch 13, wobei Ganzzahlberechnungen zum Zurückgewinnen der verlorenen/beschädigten Kompressionskonstante benutzt werden.

**22.** System nach Anspruch 13, wobei MIN geschätzt wird als der Wert, der eine mittlere Differenz zwischen einem decodierten Wert des Blocks und einem decodierten Wert eines benachbarten Blocks minimiert.

**23.** System nach Anspruch 13, wobei DR geschätzt wird als der Wert, der eine Summe aus decodierten Werten des Blocks gleich einer Summe aus decodierten Werten des benachbarten Blocks macht.

**24.** System nach Anspruch 13, wobei CEN geschätzt wird als der Wert, der eine mittlere Differenz zwischen einem decodierten Wert des Blocks und einem decodierten Wert eines benachbarten Blocks minimiert.

25. System nach Anspruch 13, wobei die Schätzungslogik betriebsfähig ist zum Ausführen einer Schätzung durch Berechnen eines Quotienten, und wobei die Schätzungslogik aufweist:

Vollpräzisionsregister, konfiguriert zum Speichern eines Zählers und eines Nenners des Quotienten,
eine Verschiebelogik, konfiguriert zum Fortschieben des niedrigstwertigsten Bits, bis der Zähler und der Nenner kleiner als $2^K$ sind, und
eine Divisionslogik, konfiguriert zum Ausführen einer K-Bit-Division, wobei K eine Konstante ist.

26. Computer-lesbares Medium, enthaltend ausführbare Instruktionen, die, wenn in einem Verarbeitungssystem ausgeführt, das System veranlassen, wenigstens eine verlorene/beschädigte Kompressionskonstante eines Blocks von codierten Bilddaten zurückzugewinnen, aufweisend: Schätzen, während einer Decodierung des Blocks, einer Kompressionskonstante des Blocks unter Benutzung codierter Daten wenigstens eines benachbarten Blocks von Daten, einer Kompressionskonstante, die einen zentralen Datenwert in einem Dynamikbereich von uncodierten Rohdatenwerten für den wenigstens einen benachbarten Block repräsentiert, und wenigstens einer zurückgewinnbaren Kompressionskonstante des Blocks anders als die geschätzte Kompressionskonstante,
wobei die codierten Daten Kompressionskonstanten aufweisen, die aus der Gruppe aufweisend MIN, CEN, DR und MAX ausgewählt sind, wobei MIN einen Minimumdatenwert im Block repräsentiert, CEN einen zentralen Wert repräsentiert, DR eine Dynamikbereich des Blocks repräsentiert und MAX einen Maximumdatenwert im Block repräsentiert.

27. Computerlesbares Medium nach Anspruch 26, wobei die Kompressionskonstante bestimmt wird unter Benutzung einer Differenzfunktion zwischen codierten Daten des Blocks von codierten Daten und des benachbarten Blocks von Daten.

28. Computerlesbares Medium nach Anspruch 26, wobei die Kompressionskonstante bestimmt wird unter Benutzung einer Kleinstquadrateschätzung.

29. Computerlesbares Medium nach Anspruch 26, wobei die Kompressionskonstante bestimmt wird als ein Wert, der eine Summe aus decodierten Werten des Blocks gleich einer Summe aus decodierten Werten des benachbarten Blocks macht.

30. Computerlesbares Medium nach Anspruch 26, wobei Schätzen aufweist:

Bestimmen von MIN entsprechend einer Formel, die aus der Gruppe aufweisend

$$MIN = \frac{2^{Q+Q'+1} \cdot N \cdot MIN' + 2^Q \cdot DR' \cdot \sum_{i=1}^{N}(2 \cdot e_i' + 1) - 2^Q \cdot DR \cdot \sum_{i=1}^{N}(2 \cdot e_i + 1)}{2^{Q+Q'+1} \cdot N}$$

und

$$MIN = \frac{(2^Q - 1) \cdot (2^{Q'} - 1) \cdot N \cdot (2 \cdot MIN' + 1) + 2 \cdot (2^Q - 1) \cdot DR' \cdot \sum_{i=1}^{N} e_i' - 2 \cdot (2^{Q'} - 1) \cdot DR \cdot \sum_{i=1}^{N} e_i}{2 \cdot (2^Q - 1) \cdot (2^{Q'} - 1) \cdot N}$$

ausgewählt ist, wobei N eine Anzahl von zu benutzenden benachbarten codierten Daten repräsentiert, MIN' den MIN-Wert des benachbarten Blocks repräsentiert, DR und DR' den DR-Wert des Blocks und des benachbarten Blocks repräsentieren, Q eine Anzahl von zum Codieren des Blocks benutzten Quantisierungsbits repräsentiert, Q' eine Anzahl von zum Codieren des benachbarten Blocks benutzten Quantisierungsbits repräsentiert, $e_i$ die codierten Daten (beispielsweise Qcodes) repräsentiert, und $e_i'$ die codierten benachbarten Daten, wie beispielsweise die codierten Daten, des benachbarten Blocks repräsentiert.

**31.** Computerlesbares Medium nach Anspruch 26, wobei Schätzen aufweist:

Bestimmen von DR entsprechend einer Formel, die aus der Gruppe aufweisend

$$DR = \frac{2^{Q} \cdot (2 \cdot CEN' - 2 \cdot CEN + DR - DR') \cdot \sum_{i=1}^{N}(2 \cdot e_i + 1) + 2^{Q-Q'} \cdot DR' \cdot \sum_{i=1}^{N}(2 \cdot e_i' + 1) \cdot (2 \cdot e_i + 1)}{\sum_{i=1}^{N}(2 \cdot e_i + 1)^2}$$

$$DR = \frac{(2^{Q} - 1) \cdot (2^{Q'} - 1) \cdot (2 \cdot CEN' - 2 \cdot CEN + DR - DR' + 1) \cdot \sum_{i=1}^{N} e_i + 2 \cdot (2^{Q} - 1) \cdot DR' \cdot \sum_{i=1}^{N}(e_i' \cdot e_i)}{2 \cdot (2^{Q'} - 1) \cdot \sum_{i=1}^{N}(e_i)^2}$$

$$DR = \frac{2^{Q} \cdot \sum_{i=1}^{N}\left[ DR' \cdot (2 \cdot e_i' + 1) + 2^{Q'} \cdot (2 \cdot CEN' - 2 \cdot CEN + DR - DR') \right]}{2^{Q'} \cdot \sum_{i=1}^{N}(2 \cdot e_i + 1)}$$

und

$$DR = \frac{(2^{Q} - 1) \cdot \sum_{i=1}^{N}\left[ 2 \cdot DR' \cdot e_i' + (2^{Q'} - 1) \cdot (2 \cdot CEN' - 2 \cdot CEN + DR - DR') \right]}{2 \cdot (2^{Q'} - 1) \cdot \sum_{i=1}^{N} e_i}$$

ausgewählt ist, wobei N eine Anzahl von zu benutzenden benachbarten codierten Daten repräsentiert, CEN und CEN' den CEN-Wert des Blocks und des benachbarten Blocks repräsentieren, Q eine Anzahl von zum Codieren benutzten Quantisierungsbits repräsentiert, Q' eine Anzahl von zum Codieren des benachbarten Blocks benutzten Quantisierungsbits repräsentiert, $e_i$ und $e_i'$ die codierten Daten des Blocks und des benachbarten Blocks repräsentieren und DR' den Dynamikbereich des benachbarten Blocks repräsentiert.

**32.** Computerlesbares Medium nach Anspruch 26, wobei CEN geschätzt wird entsprechend einer Formel, die aus der Gruppe aufweisend

$$CEN = \frac{2^{Q+Q'} \cdot N \cdot (2 \cdot CEN' + DR - DR') + 2^{Q} \cdot DR' \cdot \sum_{i=1}^{N}(2 \cdot e_i' + 1) - 2^{Q'} \cdot DR \cdot \sum_{i=1}^{N}(2 \cdot e_i + 1)}{2^{Q+Q'+1} \cdot N}$$

und

$$CEN = \frac{(2^Q -1)\cdot(2^{Q'}-1)\cdot N \cdot(2\cdot CEN' + DR - DR' + 1) + 2\cdot(2^Q -1)\cdot DR'\cdot\sum_{i=1}^{N} e_i' - 2\cdot(2^Q -1)\cdot DR\cdot\sum_{i=1}^{N} e_i}{2\cdot(2^Q -1)\cdot(2^{Q'}-1)\cdot N}$$

ausgewählt ist, wobei N eine Anzahl von zu benutzenden benachbarten codierten Daten repräsentiert, CEN' den CEN-Wert des benachbarten Blocks repräsentiert, DR und DR' den DR-Wert des Blocks und des benachbarten Blocks repräsentieren, Q eine Anzahl von zum Codieren des Blocks benutzten Quantisierungsbits repräsentiert, Q' eine Anzahl von zum Codieren des benachbarten Blocks benutzten Quantisierungsbits repräsentiert, $e_i$ die codierten Daten (beispielsweise QCodes) repräsentiert und $e_i'$ die codierten benachbarten Daten des benachbarten Blocks repräsentiert.

33. Computerlesbares Medium nach Anspruch 26, wobei MIN geschätzt wird als der Wert, der eine mittlere Differenz zwischen einem decodierten Wert des Blocks und einem decodierten Wert des benachbarten Blocks minimiert.

34. Computerlesbares Medium nach Anspruch 26, wobei DR geschätzt wird als der Wert, der eine Summe aus decodierten Werten des Blocks gleich einer Summe aus decodierten Werten des benachbarten Blocks macht.

35. Computerlesbares Medium nach Anspruch 26, wobei CEN geschätzt wird als der Wert, der eine mittlere Differenz zwischen einem decodierten Wert des Blocks und einem decodierten Wert des benachbarten Blocks minimiert.

36. Computerlesbares Medium nach Anspruch 26, wobei Ganzzahlberechnungen zum Zurückgewinnen der verlorenen/beschädigten Kompressionskonstanten benutzt werden.

37. Computerlesbares Medium nach Anspruch 26, wobei die Gleichung berechnet wird durch Bilden des Zählers und Nenners der Gleichung in Vollpräzisionsregistern, Fortschieben des niedrigstwertigen Bits, bis der Zähler und der Nenner kleiner als $2^K$ sind, und Ausführen einer Q-Bit-Division, wobei K eine Konstante ist.

38. Gerät zur Zurückgewinnung wenigstens einer verlorenen/beschädigten Kompressionskonstante für einen Block von codierten Bilddaten, aufweisend: eine Einrichtung zum Schätzen, während einer Decodierung des Blocks, einer Kompressionskonstante des Blocks unter Benutzung codierter Daten wenigstens eines benachbarten Blocks von Daten, einer Kompressionskonstante, die einen zentralen Datenwert in einem Dynamikbereich von uncodierten Rohdatenwerten für den wenigstens einen benachbarten Block repräsentiert, und wenigstens einer zurückgewinnbaren Kompressionskonstante des Blocks anders als die geschätzte Kompressionskonstante,
wobei jeder Block MIN-, CEN-, DR- und MAX-Kompressionskonstanten aufweist, die aus der Gruppe von Kompressionen ausgewählt ist, wobei MIN einen Minimumdatenwert im Block repräsentiert, CEN einen zentralen Wert repräsentiert, DR einen Dynamikbereich des Blocks repräsentiert und MAX einen Minimumdatenwert im Block repräsentiert.

39. Gerät nach Anspruch 38, wobei Schätzen ausgeführt wird entsprechend einer Gleichung, die berechnet wird durch Bilden des Zählers und Nenners der Gleichung in voller Präzision, Fortschieben bzw. -schalten eines niedrigstwertigen Bits des Zählers und des Nenners, bis der Zähler und der Nenner kleiner als $2^K$ sind, und Ausführen einer K-Bit-Division, wobei K eine Konstante ist.

## Revendications

1. Procédé de récupération d'au moins une constante de compression perdue/endommagée pour un bloc de données d'image encodées, ledit procédé consistant à estimer, pendant le décodage du bloc, une constante de compression du bloc en utilisant les données encodées d'au moins un bloc de données voisin, une constante de compression qui représente une valeur de données centrale dans une plage dynamique de valeurs de données non encodées brutes pour ledit au moins un bloc voisin, et au moins une constante de compression récupérable du bloc autre que ladite constante de compression estimée ;
dans lequel chaque bloc comprend des constantes de compression sélectionnées dans le groupe comprenant MIN, CEN, DR et MAX, où MIN représente une valeur de données minimum dans le bloc, CEN, représente une valeur centrale, DR représente une plage dynamique du bloc et MAX représente une valeur de données maximum dans le bloc.

**2.** Procédé selon la revendication 1, dans lequel la constante de compression est déterminée en utilisant une fonction de différence entre les données encodées du bloc de données encodées et du bloc de données voisin.

**3.** Procédé selon la revendication 1, dans lequel la constante de compression est déterminée en utilisant une estimation par les moindres carrés.

**4.** Procédé selon la revendication 1, dans lequel la constante de compression est déterminée en tant que valeur qui rend une somme des valeurs décodées du bloc égale à une somme des valeurs décodées du bloc voisin.

**5.** Procédé selon la revendication 1, dans lequel l'estimation comprend la détermination de MIN conformément à une formule sélectionnée dans le groupe comprenant :

$$MIN = \frac{2^{Q+Q'+1} \cdot N \cdot MIN' + 2^{Q} \cdot DR \cdot \sum_{i=1}^{N}(2 \cdot e_i' + 1) - 2^{Q'} \cdot DR' \cdot \sum_{i=1}^{N}(2 \cdot e_i + 1)}{2^{Q+Q'+1} \cdot N};$$

et

$$MIN = \frac{(2^Q - 1) \cdot (2^{Q'} - 1) N \cdot (2 \cdot MIN' + 1) + 2 \cdot (2^Q - 1) DR' \cdot \sum_{i=1}^{N} e_i' - 2 \cdot (2^{Q'} - 1) DR \cdot \sum_{i=1}^{N} e_i}{2 \cdot (2^Q - 1)(2^{Q'} - 1) N}$$

où N représente un nombre de données encodées voisines à utiliser, MIN' représente la valeur MIN du bloc voisin, DR et DR' représentent respectivement la valeur DR du bloc et du bloc voisin, Q représente un nombre de bits de quantification utilisés pour encoder le bloc, Q' représente un nombre de bits de quantification utilisés pour encoder le bloc voisin, $e_i$ représente les données encodées (par exemple, Qcodes) et $e_i'$ représente les données voisines encodées, telles que les données encodées du bloc voisin.

**6.** Procédé selon la revendication 1, dans lequel l'estimation comprend la détermination de DR conformément à une formule sélectionnée dans le groupe comprenant :

$$DR = \frac{2^Q \cdot (2 \cdot CEN' - 2 \cdot CEN + DR - DR') \sum_{i=1}^{N}(2 \cdot e_i + 1) + 2^{Q-Q'} \cdot DR' \cdot \sum_{i=1}^{N}(2 \cdot e_i' + 1)(2 \cdot e_i + 1)}{\sum_{i=1}^{N}(2 \cdot e_i + 1)^2},$$

$$DR = \frac{(2^Q - 1) \cdot (2^{Q'} - 1)(2 \cdot CEN' - 2 \cdot CEN + DR - DR' + 1) \cdot \sum_{i=1}^{N} e_i + 2 \cdot (2^Q - 1) DR' \cdot \sum_{i=1}^{N}(e_i' \cdot e_i)}{2 \cdot (2^Q - 1) \sum_{i=1}^{N}(e_i)^2},$$

$$DR = \frac{2^Q \cdot \sum_{i=1}^{N} \left[ DR' \cdot (2e'_i + 1) + 2^{Q'} \cdot (2 \cdot CEN' - 2 \cdot CEN + DR - DR') \right]}{2^{Q'} \cdot \sum_{i=1}^{N} (2e_i + 1)}$$

et

$$DR = \frac{(2^Q - 1) \cdot \sum_{i=1}^{N} \left[ 2 \cdot DR' \cdot e'_i + (2^{Q'} - 1) \cdot (2 \cdot CEN' - 2 \cdot CEN + DR - DR') \right]}{2 \cdot (2^{Q'} - 1) \cdot \sum_{i=1}^{N} e_i}$$

où N représente un nombre de données encodées voisines à utiliser, CEN et CEN' représentent respectivement la valeur CEN du bloc et du bloc voisin, Q représente un nombre de bits de quantification utilisés pour encoder, Q' représente un nombre de bits de quantification utilisés pour encoder le bloc voisin, $e_i$ et $e_i'$ représentent respectivement les données encodées du bloc et du bloc voisin et DR' représente la plage dynamique du bloc voisin.

7. Procédé selon la revendication 1, dans lequel l'estimation comprend la détermination de CEN conformément à une formule sélectionnée dans le groupe comprenant :

$$CEN = \frac{2^{Q+Q'} \cdot N \cdot (2 \cdot CEN' + DR - DR') + 2^Q \cdot DR' \cdot \sum_{i=1}^{N} (2 \cdot e_i' + 1) - 2^{Q'} \cdot DR \cdot \sum_{i=1}^{N} (2 \cdot e_i + 1)}{2^{Q+Q'+1} \cdot N}$$

et

$$CEN = \frac{(2^Q - 1) \cdot (2^{Q'} - 1) N \cdot (2 \cdot CEN' + DR - DR' + 1) + 2 \cdot (2^Q - 1) \cdot DR' \cdot \sum_{i=1}^{N} e_i' - 2 \cdot (2^{Q'} - 1) \cdot DR \cdot \sum_{i=1}^{N} e_i}{2 \cdot (2^Q - 1) \cdot (2^{Q'} - 1) N}$$

où N représente un nombre de données encodées voisines à utiliser, CEN' représente la valeur CEN, du bloc voisin, DR et DR' représentent respectivement la valeur DR du bloc et du bloc voisin, Q représente un nombre de bits de quantification utilisés pour encoder le bloc, Q' représente un nombre de bits de quantification utilisés pour encoder le bloc voisin, $e_i$ représente les données encodées (par exemple, Qcodes) et $e_i'$ représente les données voisines encodées du bloc voisin.

8. Procédé selon la revendication 1, dans lequel des calculs d'entiers sont utilisés pour récupérer la constante de compression perdue/endommagée.

9. Procédé selon la revendication 1, dans lequel MIN est estimé en tant que valeur qui réduit à un minimum une différence moyenne entre une valeur décodée du bloc et une valeur décodée du bloc voisin.

10. Procédé selon la revendication 1, dans lequel DR est estimé en tant que valeur qui rend une somme des valeurs décodées du bloc égale à la somme des valeurs décodées du bloc voisin.

11. Procédé selon la revendication 1, dans lequel CEN est estimé en tant que valeur qui réduit à un minimum une différence moyenne entre une valeur décodée du bloc et une valeur décodée du bloc voisin.

**12.** Procédé selon la revendication 1, dans lequel l'étape d'estimation comprend le calcul d'un quotient ayant un numérateur et un dénominateur, et dans lequel ledit quotient est calculé en formant le numérateur et le dénominateur de l'équation en pleine précision, en décalant un bit le moins significatif du numérateur et du dénominateur jusqu'à ce que le numérateur et le dénominateur soient inférieurs à $2^K$, et en effectuant une division par K bits, où K est une constante.

**13.** Système pour récupérer au moins une constante de compression perdue/endommagée pour un bloc de données d'image encodées comprenant un estimateur configuré pour recevoir, en tant qu'entrée, les données encodées d'au moins un bloc de données voisin, une constante de compression qui représente une valeur de données centrale dans une plage dynamique de valeurs de données non encodées brutes pour ledit au moins un bloc voisin, et au moins une constante de compression récupérable du bloc autre que ladite constante de compression estimée ; et estimer, pendant le décodage du bloc, une constante de compression en utilisant l'entrée ;
dans lequel chaque bloc comprend des constantes de compression sélectionnées dans le groupe comprenant les constantes de compression MIN, CEN, DR et MAX, où MIN représente une valeur de données minimum dans le bloc, CEN représente une valeur centrale, DR représente une plage dynamique du bloc et MAX, représente une valeur de données maximum dans le bloc.

**14.** Système selon la revendication 13, dans lequel l'estimateur est choisi dans un groupe comprenant un circuit logique d'estimation, un processeur et une combinaison d'une logique d'estimation et d'un processeur.

**15.** Système selon la revendication 13, dans lequel la constante de compression est déterminée en utilisant une fonction de différence entre les données encodées du bloc de données encodées et du bloc de données voisin.

**16.** Système selon la revendication 13, dans lequel la constante de compression est déterminée en utilisant une estimation par les moindres carrés.

**17.** Système selon la revendication 13, dans lequel la constante de compression est déterminée en tant que valeur qui rend une somme des valeurs décodées du bloc égale à une somme des valeurs décodées du bloc voisin.

**18.** Système selon la revendication 13, dans lequel MIN est estimé conformément à une formule sélectionnée dans le groupe comprenant :

$$MIN = \frac{2^{Q+Q'+1} \cdot N \cdot MIN' + 2^Q \cdot DR \cdot \sum_{i=1}^{N}(2 \cdot e_i' + 1) - 2^{Q'} \cdot DR \cdot \sum_{i=1}^{N}(2 \cdot e_i + 1)}{2^{Q+Q'+1} \cdot N} ;$$

et

$$MIN = \frac{(2^Q - 1) \cdot (2^{Q'} - 1) N \cdot (2 \cdot MIN' + 1) + 2 \cdot (2^Q - 1) DR \cdot \sum_{i=1}^{N} e_i' - 2 \cdot (2^{Q'} - 1) DR \cdot \sum_{i=1}^{N} e_i}{2 \cdot (2^Q - 1)(2^{Q'} - 1) N}$$

où N représente un nombre de données encodées voisines à utiliser, MIN' représente la valeur MIN du bloc voisin, DR et DR' représentent respectivement la valeur DR du bloc et du bloc voisin, Q représente un nombre de bits de quantification utilisés pour encoder le bloc, Q' représente un nombre de bits de quantification utilisés pour encoder le bloc voisin, $e_i$ représente les données encodées (par exemple, Qcodes) et $e_i'$ représente les données voisines encodées, telles que les données encodées du bloc voisin.

**19.** Système selon la revendication 13, dans lequel DR est estimé conformément à une formule sélectionnée dans le groupe comprenant :

$$DR = \frac{2^{Q} \cdot (2 \cdot CEN' - 2 \cdot CEN + DR - DR') \cdot \sum_{i=1}^{N}(2 \cdot e_i + 1) + 2^{Q-Q'} \cdot DR' \cdot \sum_{i=1}^{N}(2 \cdot e_i' + 1)(2 \cdot e_i + 1)}{\sum_{i=1}^{N}(2 \cdot e_i + 1)^2},$$

$$DR = \frac{(2^{Q}-1)(2^{Q'}-1)(2 \cdot CEN' - 2 \cdot CEN + DR - DR' + 1) \cdot \sum_{i=1}^{N} e_i + 2 \cdot (2^{Q}-1) \cdot DR' \cdot \sum_{i=1}^{N}(e_i' \cdot e_i)}{2 \cdot (2^{Q'}-1) \sum_{i=1}^{N}(e_i)^2},$$

$$DR = \frac{2^{Q} \cdot \sum_{i=1}^{N}\left[ DR' \cdot (2e_i' + 1) + 2^{Q'} \cdot (2 \cdot CEN' - 2 \cdot CEN + DR - DR') \right]}{2^{Q'} \cdot \sum_{i=1}^{N}(2e_i + 1)};$$

et

$$DR = \frac{(2^{Q}-1) \cdot \sum_{i=1}^{N}\left[ 2 \cdot DR' \cdot e_i' + (2^{Q'}-1) \cdot (2 \cdot CEN' - 2 \cdot CEN + DR - DR') \right]}{2 \cdot (2^{Q'}-1) \cdot \sum_{i=1}^{N} e_i}$$

où N représente un nombre de données encodées voisines à utiliser, CEN, et CEN' représentent respectivement la valeur CEN du bloc et du bloc voisin, Q représente un nombre de bits de quantification utilisés pour encoder, Q' représente un nombre de bits de quantification utilisés pour encoder le bloc voisin, $e_i$ et $e_i'$ représentent respectivement les données encodées du bloc et du bloc voisin et DR' représente la plage dynamique du bloc voisin.

**20.** Système selon la revendication 13, dans lequel CEN est estimé conformément à une formule sélectionnée dans le groupe comprenant :

$$CEN = \frac{2^{Q+Q'} \cdot N \cdot (2 \cdot CEN' + DR - DR') + 2^{Q} \cdot DR' \cdot \sum_{i=1}^{N}(2 \cdot e_i' + 1) - 2^{Q'} \cdot DR \cdot \sum_{i=1}^{N}(2 \cdot e_i + 1)}{2^{Q+Q'+1} \cdot N}$$

et

$$CEN = \frac{(2^{Q}-1) \cdot (2^{Q'}-1) \cdot N \cdot (2 \cdot CEN' + DR - DR' + 1) + 2 \cdot (2^{Q}-1) \cdot DR' \cdot \sum_{i=1}^{N} e_i' - 2 \cdot (2^{Q'}-1) \cdot DR \cdot \sum_{i=1}^{N} e_i}{2 \cdot (2^{Q}-1) \cdot (2^{Q'}-1) \cdot N}$$

où N représente un nombre de données encodées voisines à utiliser, CEN' représente la valeur CEN du bloc voisin, DR et DR' représentent respectivement la valeur DR du bloc et du bloc voisin, Q représente un nombre de bits de quantification utilisés pour encoder le bloc, Q' représente un nombre de bits de quantification utilisés pour encoder

le bloc voisin, $e_i$ représente les données encodées (par exemple, Qcodes) et $e_i'$ représente les données voisines encodées du bloc voisin.

21. Système selon la revendication 13, dans lequel des calculs d'entiers sont utilisés pour récupérer la constante de compression perdue/endommagée.

22. Système selon la revendication 13, dans lequel MIN est estimé en tant que valeur qui réduit à un minimum une différence moyenne entre une valeur décodée du bloc et une valeur décodée d'un bloc voisin.

23. Système selon la revendication 13, dans lequel DR est estimé en tant que valeur qui rend une somme des valeurs décodées du bloc égale à une somme des valeurs décodées du bloc voisin.

24. Système selon la revendication 13, dans lequel CEN est estimé en tant que valeur qui réduit à un minimum une différence moyenne entre une valeur décodée du bloc et une valeur décodée d'un bloc voisin.

25. Système selon la revendication 13, dans lequel la logique d'estimation peut être utilisée pour effectuer ladite estimation en calculant un quotient, et dans lequel ladite logique d'estimation comprend :

des registres de pleine précision configurés pour mémoriser un numérateur et un dénominateur dudit quotient ;
une logique de décalage configurée pour décaler le bit le moins significatif jusqu'à ce que le numérateur et le dénominateur soient inférieurs à $2^K$ ; et
une logique de division configurée pour effectuer une division par K bits, où K est une constante.

26. Support pouvant être lu par un ordinateur contenant des instructions exécutables qui, lorsqu'elles sont exécutées dans un système de traitement, amènent le système à récupérer au moins une constante de compression perdue/ endommagée d'un bloc de données d'image encodées, comprenant l'estimation, pendant le décodage du bloc, d'une constante de compression du bloc en utilisant les données encodées d'au moins un bloc de données voisin, une constante de compression qui représente une valeur de données centrale dans une plage dynamique de valeurs de données non encodées brutes pour ledit au moins un bloc voisin, et au moins une constante de compression récupérable du bloc autre que ladite constante de compression estimée ;
dans lequel les données encodées comprennent des constantes de compression sélectionnées dans le groupe comprenant MIN, CEN, DR et MAX, où MIN représente une valeur de données minimum dans le bloc, CEN représente une valeur centrale, DR représente une plage dynamique du bloc et MAX représente une valeur de données maximum dans le bloc.

27. Support pouvant être lu par un ordinateur selon la revendication 26, dans lequel la constante de compression est déterminée en utilisant une fonction de différence entre les données encodées du bloc de données encodées et du bloc de données voisin.

28. Support pouvant être lu par un ordinateur selon la revendication 26, dans lequel la constante de compression est déterminée en utilisant une estimation par les moindres carrés.

29. Support pouvant être lu par un ordinateur selon la revendication 26, dans lequel la constante de compression est déterminée en tant que valeur qui rend une somme des valeurs décodées du bloc égale à une somme des valeurs décodées du bloc voisin.

30. Support pouvant être lu par un ordinateur selon la revendication 26, dans lequel l'estimation comprend la détermination de MIN conformément à une formule sélectionnée dans le groupe comprenant :

$$MIN = \frac{2^{Q+Q'+1} \cdot N \cdot MIN' + 2^Q \cdot DR \cdot \sum_{i=1}^{N}(2 \cdot e_i' + 1) - 2^{Q'} \cdot DR' \cdot \sum_{i=1}^{N}(2 \cdot e_i + 1)}{2^{Q+Q'+1} \cdot N},$$

et

$$MIN = \frac{(2^Q -1)(2^{Q'} -1) N \cdot (2 MIN' +1)+2 \cdot (2^Q -1) \cdot DR \cdot \sum_{i=1}^{N} e_i' -2 \cdot (2^{Q'} -1) DR \cdot \sum_{i=1}^{N} e_i}{2 \cdot (2^Q -1)(2^{Q'} -1) N}$$

où N représente un nombre de données encodées voisines à utiliser, MIN' représente la valeur MIN du bloc voisin, DR et DR' représentent respectivement la valeur DR du bloc et du bloc voisin, Q représente un nombre de bits de quantification utilisés pour encoder le bloc, Q' représente un nombre de bits de quantification utilisés pour encoder le bloc voisin, $e_i$ représente les données encodées (par exemple, Qcodes) et $e_i$' représente les données voisines encodées, telles que les données encodées du bloc voisin.

**31.** Support pouvant être lu par un ordinateur selon la revendication 26, dans lequel l'estimation comprend la détermination de DR conformément à une formule sélectionnée dans le groupe comprenant :

$$DR = \frac{2^Q \cdot (2 \cdot CEN' -2 \cdot CEN + DR - DR') \cdot \sum_{i=1}^{N} (2 \cdot e_i +1)+2^{Q-Q'} \cdot DR \cdot \sum_{i=1}^{N} (2 \cdot e_i' +1)(2 \cdot e_i +1)}{\sum_{i=1}^{N} (2 \cdot e_i +1)^2},$$

$$DR = \frac{(2^Q -1)(2^{Q'} -1)(2 \cdot CEN' -2 \cdot CEN + DR - DR' +1) \cdot \sum_{i=1}^{N} e_i + 2 \cdot (2^Q -1) DR \cdot \sum_{i=1}^{N} (e_i' \cdot e_i)}{2 \cdot (2^{Q'} -1) \sum_{i=1}^{N} (e_i)^2},$$

$$DR = \frac{2^Q \cdot \sum_{i=1}^{N} [DR'(2e_i' +1)+2^{Q'} \cdot (2 \cdot CEN' -2 \cdot CEN + DR - DR')]}{2^{Q'} \cdot \sum_{i=1}^{N} (2e_i +1)}$$

et

$$DR = \frac{(2^Q -1) \cdot \sum_{i=1}^{N} [2 \cdot DR' \cdot e_i' +(2^{Q'} -1) \cdot (2 \cdot CEN' -2 \cdot CEN + DR - DR')]}{2 \cdot (2^{Q'} -1) \cdot \sum_{i=1}^{N} e_i}$$

où N représente un nombre de données encodées voisines à utiliser, CEN et CEN' représentent respectivement la valeur CEN du bloc et du bloc voisin, Q représente un nombre de bits de quantification utilisés pour encoder, Q' représente un nombre de bits de quantification utilisés pour encoder le bloc voisin, $e_i$ et $e_i$' représentent respectivement les données encodées du bloc et du bloc voisin et DR' représente la plage dynamique du bloc voisin.

**32.** Support pouvant être lu par un ordinateur selon la revendication 26, dans lequel CET est estimé conformément à une formule sélectionnée dans le groupe comprenant :

$$CEN = \frac{2^{Q+Q'} \cdot N \cdot (2 \cdot CEN' + DR - DR') + 2^{Q'} \cdot DR \cdot \sum_{i=1}^{N}(2 \cdot e_i' + 1) - 2^{Q'} \cdot DR \cdot \sum_{i=1}^{N}(2 \cdot e_i + 1)}{2^{Q+Q'+1} \cdot N}$$

et

$$CEN = \frac{(2^{Q'} - 1) \cdot (2^{Q'} - 1) \cdot N \cdot (2 \cdot CEN' + DR - DR' + 1) + 2 \cdot (2^{Q} - 1) \cdot DR \cdot \sum_{i=1}^{N} e_i' - 2 \cdot (2^{Q'} - 1) \cdot DR \cdot \sum_{i=1}^{N} e_i}{2 \cdot (2^{Q} - 1) \cdot (2^{Q'} - 1) \cdot N}$$

où N représente un nombre de données encodées voisines à utiliser, CEN' représente la valeur CEN du bloc voisin, DR et DR' représentent respectivement la valeur DR du bloc et du bloc voisin, Q représente un nombre de bits de quantification utilisés pour encoder le bloc, Q' représente un nombre de bits de quantification utilisés pour encoder le bloc voisin, $e_i$ représente les données encodées (par exemple, Qcodes) et $e_i'$ représente les données voisines encodées du bloc voisin.

33. Support pouvant être lu par un ordinateur selon la revendication 26, dans lequel MIN est estimé en tant que valeur qui réduit à un minimum une différence moyenne entre une valeur décodée du bloc et une valeur décodée du bloc voisin.

34. Support pouvant être lu par un ordinateur selon la revendication 26, dans lequel DR est estimé en tant que valeur qui rend une somme des valeurs décodées du bloc égale à une somme des valeurs décodées du bloc voisin.

35. Support pouvant être lu par un ordinateur selon la revendication 26, dans lequel CEN est estimé en tant que valeur qui réduit à un minimum une différence moyenne entre une valeur décodée du bloc et une valeur décodée du bloc voisin.

36. Support pouvant être lu par un ordinateur selon la revendication 26, dans lequel des calculs d'entiers sont utilisés pour récupérer les constantes de compression perdues/endommagées.

37. Support pouvant être lu par un ordinateur selon la revendication 26, dans lequel l'équation est calculée en formant le numérateur et le dénominateur de l'équation dans des registres de pleine précision, en décalant le bit le moins significatif jusqu'à ce que le numérateur et le dénominateur soient inférieurs à $2^K$, et en effectuant une division par K bits, où K est une constante.

38. Appareil pour récupérer au moins une constante de compression perdue/endommagée pour un bloc de données d'image encodées, comprenant des moyens pour estimer, pendant le décodage du bloc, une constante de compression du bloc en utilisant les données encodées d'au moins un bloc de données voisin, une constante de compression qui représente une valeur de données centrale dans une plage dynamique de valeurs de données non encodées brutes pour ledit au moins un bloc voisin, et au moins une constante de compression récupérable du bloc autre que ladite constante de compression estimée ;
dans lequel chaque bloc comprend des constantes de compression MIN, CET, DR et MAX sélectionnées dans le groupe de compressions, où MIN représente une valeur de données minimum dans le bloc, CEN représente une valeur centrale, DR représente une plage dynamique du bloc et MAX représente une valeur de données maximum dans le bloc.

39. Appareil selon la revendication 38, dans lequel l'estimation est effectuée conformément à une équation calculée en formant le numérateur et le dénominateur de l'équation en pleine précision, en décalant un bit le moins significatif du numérateur et du dénominateur jusqu'à ce que le numérateur et le dénominateur soient inférieurs à $2^K$, et en effectuant une division par K bits, où K est une constante.

START

RECEIVE INPUT
AS NEIGHBORING BLOCK
ENCODED DATA, ENCODED
DATA AND ANY
. RECOVERABLE COMPRESSION
CONSTANTS
105

ESTIMATE LOST/DAMAGED
COMPRESSION CONSTANT
USING NEIGHBORING ENCODED
DATA, ENCODED DATA AND
RECOVERED COMPRESSION
CONSTANTS
110

END

# FIG. 1

START

COMPUTE NUMERATOR
USING FULL PRECISION _205

COMPUTE DENOMINATOR
USING FULL PRECISION _210

REDUCE NUMERATOR AND
DENOMINATOR TO K-BITS _215

CLIP FOR CONSISTENCY
WITH OTHER COMPRESSION
CONSTANTS _230

END

# FIG. 2

32

EP 1 151 615 B1

310

NUMERATOR
LOGIC

INPUT

350

COMPUTATION
LOGIC

360

CLIP
LOGIC

→ OUTPUT

320

DENOMINATOR
LOGIC

**FIG. 3a**

370

380

INPUT

I
N
P
U
T

375

PROCESSOR

385

O
U
T
P
U
T

395

DISPLAY

390

MEMORY

**FIG. 3b**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 24959699 A

- US 5768534 A

**Non-patent literature cited in the description**

- **JAE-WHO SUH ; YO-SUNG HO.** Error Concealment based on directional interpolation. *IEEE Transactions On Consumer Electronics,* 01 August 1997, vol. 43 (3), 295-302